# EUROPEAN PATENT APPLICATION

(11) **EP 4 383 246 A1**
(43) Date of publication of application: **12.06.2024**
(21) Application number: 22874896.8
(22) Date of filing: 27.09.2022
(51) Int. Cl.: G09G 5/377

(54) **ICON MOVING METHOD, RELATED GRAPHICAL INTERFACE, AND ELECTRONIC DEVICE**

(30) Priority: 30.09.2021 CN 202111161063
(71) Applicant: Huawei Technologies Co., Ltd., Shenzhen, Guangdong 518129 (CN)
(72) Inventor: FAN, Kai, Shenzhen, Guangdong 518129 (CN); LIU, Yongsheng, Shenzhen, Guangdong 518129 (CN); CAO, Xiongwei, Shenzhen, Guangdong 518129 (CN)
(74) Representative: MERH-IP Matias Erny Reichl Hoffmann Patentanwälte PartG mbB
(86) International application number: PCT/CN2022/121654
(87) International publication number: WO 2023/051511

(57) **Abstract**

This application discloses an icon moving method, a related graphical interface, and an electronic device. In a process in which a user moves an icon, the icon moving method may support the electronic device in appropriately adjusting an interface layout to scale down an application icon in a specific ratio, so as to display all application icons on one interface or display more application icons than those displayed on the interface before the icon is moved, so that the user can quickly confirm a target location of the icon in the process of moving the application icon. The icon moving method may further support the electronic device in dynamically scaling up or down a size of the application icon on the interface based on a speed at which the user drags the application icon. By implementing the method provided in this application, the user can quickly locate the target location in the process of moving the application icon. The method provides a more convenient, quicker, and more user-friendly interface operation manner, reduces time for dragging the application icon to the target location, improves human-computer interaction performance, facilitates a user operation, and improves user experience.

## Description

This application claims priority to Chinese Patent Application No. 202111161063.1, filed with the China National Intellectual Property Administration on September 30, 2021 and entitled "ICON MOVING METHOD, RELATED GRAPHICAL INTERFACE, AND ELECTRONIC DEVICE", which is incorporated herein by reference in its entirety.

### TECHNICAL FIELD

This application relates to the field of terminal technologies, and in particular, to an icon moving method, a related graphical interface, and an electronic device.

### BACKGROUND

As terminal devices upgrade, users have an increasing quantity of requirements for diversified functions. To meet the requirements for the diversified functions, the users install applications (applications, APPs) on the terminal devices.

For an intelligent terminal device provided with a display, application icons corresponding to installed applications may be displayed on the display, and a user may adjust locations of these application icons. For example, the user may drag an application icon to a target location, to move the application icon, where the target location is a location at which the user wants to place the application icon.

However, if a large quantity of applications are installed on the terminal device, especially when locations of an application icon displayed before and after the application icon is moved are far away from each other, it is difficult for the user to find a target location when the user moves the application icon, and it is difficult to drag the application icon to the target location. Consequently, the dragging process takes a long time, and user experience is poor.

### SUMMARY

This application provides an icon moving method, a related graphical interface, and an electronic device. In a process in which a user moves an icon, the icon moving method can support an electronic device in appropriately adjusting an interface layout to scale down an application icon in a specific ratio, so as to display all application icons on one interface or display more application icons than those displayed on the interface before the icon is moved, so that the user can quickly confirm a target location of the icon in the process of moving the application icon. The icon moving method may further support the electronic device in dynamically scaling up or down a size of an application icon on an interface based on a speed at which the user drags the application icon.

The foregoing objective and other objectives are achieved by using features in the independent claims. Further implementations are embodied in the dependent claims, the specification, and the accompanying drawings.

According to a first aspect, an embodiment of this application provides an icon moving method. The method includes: An electronic device displays N application icons on a first interface on a screen, where the N application icons include a first application icon, and the first application icon is arranged at a first location on the first interface. The electronic device detects a first user operation of selecting and moving the first application icon. The electronic device displays more than N application icons on the first interface on the screen. The electronic device detects a second user operation of releasing, by a user, the first application icon on the first interface. The electronic device changes arrangement of the first application icon to a second location on the first interface, where the second location is a location, on the first interface, at which the first application icon is released by the user.

By implementing the method in the first aspect, the user can quickly locate a target location in a process of moving an application icon. The method provides a more convenient, quicker, and more user-friendly interface operation manner, reduces time for dragging the application icon to the target location, improves human-computer interaction performance, facilitates a user operation, and improves user experience.

With reference to the first aspect, in some embodiments, the first user operation of selecting and moving the first application icon may include an operation of selecting the first application icon without release, or an operation of selecting and moving the first application icon. To be specific, the electronic device may display an interface of more application icons when the user selects the first application icon without release and the first application icon is not moved. If the user selects the first application icon without movement, and then releases the first application icon, in this process, the electronic device may alternatively display an interface of more application icons, namely, an icon editing interface. Alternatively, the electronic device may not display a changed interface when the user selects the first application icon without release, but start to display an interface of more application icons at a moment at which the user moves the first application icon.

With reference to the first aspect, in some embodiments, the first user operation includes the operation of selecting the first application icon without release, the electronic device further detects a drag operation, and the electronic device moves the first application icon on the first interface based on the drag operation.

With reference to the first aspect, in some embodiments, the first user operation includes the operation of selecting and dragging the first application icon, and the electronic device moves the first application icon on the first interface based on the operation of dragging the first application icon.

With reference to the first aspect, in some embodiments, when detecting that the first application icon is selected without release, the electronic device displays the more than N application icons on the first interface on the screen; and/or when the first application icon is selected and dragged, the electronic device displays the more than N application icons on the first interface on the screen.

With reference to the first aspect, in some embodiments, a quantity of application icons displayed on the screen is less than or equal to M, and M is a quantity of all application icons in the electronic device.

With reference to the first aspect, in some embodiments, a size of an application icon displayed on the screen is greater than or equal to a first icon size, and is less than or equal to a second icon size. That is, the size of the application icon has an upper limit and a lower limit. For example, a scaling ratio of the first interface on which all application icons can be exactly displayed and there is no redundant gap is referred to as a maximum ratio, and a size of the application icons is referred to as a minimum size (first icon size); and a scaling ratio of the first interface on which only one complete application icon can be displayed is referred to as a minimum ratio, and a size of the application icon is referred to as a maximum size (second icon size). A larger scaling ratio of the first interface indicates a smaller size of an application icon on the interface. Other scaling ratios of the first interface are between the minimum ratio and the maximum ratio, or a size of the application icon on the first interface is between the minimum size and the maximum size. Regardless of a speed at which the first application icon is dragged, a changed scaling ratio of the first interface is between the minimum ratio and the maximum ratio, or a changed size of the application icon on the first interface is between the minimum size and the maximum size.

With reference to the first aspect, in some embodiments, in a process of moving the first application icon, a higher speed indicates a smaller size of the application icon on the first interface or a larger quantity of application icons displayed by the electronic device on the screen. An interface is scaled up to display more application icons, so that the user can quickly search for the target location, and the first application icon can be moved quicker to a location near the target location.

With reference to the first aspect, in some embodiments, in the process of moving the first application icon, a lower speed indicates a larger size of the application icon on the first interface or a smaller quantity of application icons displayed by the electronic device on the screen. An interface is scaled down to display fewer application icons, so that the user can accurately locate the target location.

With reference to the first aspect, in some embodiments, in the process of moving the first application icon, the electronic device changes arrangement of the first application icon on the first interface.

With reference to the first aspect, in some embodiments, an application icon displayed after the electronic device detects the first user operation is scaled down in size compared with the application icon displayed before the electronic device detects the first user operation.

With reference to the first aspect, in some embodiments, a size of the N application icons is a first size, a size of the more than N application icons is a second size, and the second size is less than or equal to the first size.

In some embodiments, the second size may be equal to the first size. In this case, a spacing between application icons is reduced, and more application icons may be displayed on the screen. In some embodiments, the second size may alternatively be less than the first size. In a case in which a display size of application icons is reduced and a spacing between the application icons remains unchanged, more application icons may be displayed on the screen.

With reference to the first aspect, in some embodiments, the more than N application icons include the N application icons.

With reference to the first aspect, in some embodiments, the more than N application icons are all application icons in the electronic device.

With reference to the first aspect, in some embodiments, when detecting that the first application icon is selected, the electronic device scales up the first application icon for display, scales down the first application icon for display, keeps a size of the first application icon unchanged, or marks the first application icon as a selected state.

In some embodiments, before and after the electronic device detects the first user operation, the display size of the first application icon may remain unchanged, or may change dynamically with a size of the another application icon on the first interface.

With reference to the first aspect, in some embodiments, when the first application icon stops moving or a movement speed of the first application icon is less than a first speed, a quantity of application icons displayed on the screen is less than N.

With reference to the first aspect, in some embodiments, when the first application icon stops moving or the movement speed of the first application icon is less than a second speed, an application icon at a location of the first application icon on the first interface is scaled up for display.

With reference to the first aspect, in some embodiments, after the electronic device changes the arrangement of the first application icon to the second location on the first interface, the electronic device displays, on the screen, the first application icon arranged at the second location on the first interface.

With reference to the first aspect, in some embodiments, after the electronic device changes the arrangement of the first application icon to the second location on the first interface, the electronic device detects a third user operation of moving the first interface. Then, the electronic device displays, on the screen, the first application icon arranged at the second location on the first interface.

With reference to the first aspect, in some embodiments, before the electronic device changes the arrangement of the first application icon to the second location on the first interface, a second application icon is located at the second location.

With reference to the first aspect, in some embodiments, when the electronic device changes the arrangement of the first application icon to the second location on the first interface, arrangement of the second application icon is changed to the first location.

With reference to the first aspect, in some embodiments, when the electronic device changes the arrangement of the first application icon to the second location on the first interface, the second application icon is moved to a location next to the second location.

In some embodiments, the second user operation of releasing the first application icon may be an operation of releasing a finger by the user from a display.

With reference to the first aspect, in some embodiments, the first interface includes a plurality of pages, application icons on the first interface are arranged on the plurality of pages, and the N application icons are arranged on the first page. For example, the first interface is a home screen of a mobile phone, and the home screen may include a plurality of pages. The user may switch a display page of the home screen through an operation, for example, swiping leftward or swiping rightward.

With reference to the first aspect, in some embodiments, the electronic device displays the plurality of scaled-down pages on the screen, where a quantity of application icons included on the plurality of scaled-down pages is greater than N.

According to a second aspect, an embodiment of this application provides an icon moving method, including: An electronic device displays a first page, where a first application icon is displayed at a first location on the first page, application icons of the electronic device are arranged on K pages, and the K pages include the first page and a second page. The electronic device detects a first user operation of selecting and moving the first application icon. The electronic device displays an interface of L scaled-down pages, where L is less than or equal to K. The electronic device detects a movement operation of moving the first application icon to the scaled-down second page. The electronic device scales up the second page for display. The electronic device detects a second user operation of releasing the first application icon on the second page. The electronic device changes arrangement of the first application icon to a second location on the second page, where the second location is a location, on the second page, at which the first application icon is released by a user.

By implementing the method in the second aspect, the user can quickly locate a target page in a process of moving an application icon, and further locate a target location, so that the user can move the application icon quicker, especially when there are a large quantity of pages and a start page and the target page are not adjacent. This provides better user experience. The method provides a more convenient, quicker, and more user-friendly interface operation manner, reduces time for dragging the application icon to the target location, improves human-computer interaction performance, facilitates a user operation, and improves user experience.

With reference to the second aspect, in some embodiments, the L pages include the scaled-down first page and the scaled-down second page.

With reference to the second aspect, in some embodiments, a higher speed of moving the first application icon indicates more pages displayed on the interface.

With reference to the second aspect, in some embodiments, a lower speed of moving the first application icon indicates fewer pages displayed on the interface.

With reference to the second aspect, in some embodiments, a size of each page displayed on the interface of the L scaled-down pages is greater than or equal to a first page size, and is less than or equal to a second page size. That is, a page size of the L scaled-down pages has an upper limit and a lower limit. For example, a scaling ratio of a second interface on which all desktop pages can be exactly displayed and there is no redundant gap is referred to as a maximum ratio, and a size of the pages is referred to as a minimum size (the first page size); and a scaling ratio of the second interface on which only one complete desktop page can be displayed is referred to as a minimum ratio, and a size of the desktop page is referred to as a maximum size (the second page size). A larger scaling ratio of the second interface indicates a smaller size of each page on the interface. Other scaling ratios of the second interface are between the minimum ratio and the maximum ratio, or a size of each page on a first interface is between the minimum size and the maximum size. Regardless of a speed at which the first application icon is dragged, a changed scaling ratio of the second interface is between the minimum ratio and the maximum ratio, or a changed size of each page on the second interface is between the minimum size and the maximum size.

In some embodiments, the electronic device may further determine a scaling ratio of the second interface based on a drag speed interval in which a drag speed for dragging the first application icon by the user is located, where the drag speed is detected in real time. That is, the scaling ratio of the second interface may be segmented, and one scaling ratio corresponds to a plurality of movement speeds within one interval.

In some embodiments, the first user operation of selecting and moving the first application icon may be an operation of selecting the first application icon without release. In this case, the electronic device may display a second interface of more pages when the user selects the first application icon without release and the first application icon is not moved. If the user selects the first application icon without movement, and then releases the first application icon, in this process, the electronic device may alternatively display a second interface of more pages, namely, a page selection interface.

When the first user operation is the operation of selecting the first application icon without release, the electronic device may further detect a drag operation of the user on the first application icon on the second interface after the first user operation. The electronic device may move the first application icon on the second interface based on the drag operation.

In some other embodiments, the first user operation of selecting and moving the first application icon may alternatively be an operation of selecting and dragging the first application icon. In this case, the electronic device may not display the second interface when the user selects the first application icon without release, but start to display a second interface of more pages at a moment at which the user moves the first application icon.

When the first user operation is the operation of selecting and dragging the first application icon, the electronic device may move an application icon on the second interface based on the drag operation in the first user operation.

With reference to the second aspect, in some embodiments, when detecting that the first application icon is selected, the electronic device scales up the first application icon for display, scales down the first application icon for display, keeps a size of the first application icon unchanged, or marks the first application icon as a selected state.

In some embodiments, when the user selects the first application icon, an interface of a plurality of pages may be triggered for display.

In some other embodiments, when the user selects the first application icon, drags the first application icon to an edge of a screen, and continues to move the first application icon outward, an interface of a plurality of pages is triggered for display. In the operation manner, it is considered that the user moves an icon on a same page without a redundant operation. If it is detected that the user drags the first application icon out of a page on which the first application icon is located, it indicates that the user has a demand of moving the first application icon to another page. Especially when the target page and the another page are not adjacent, an interface that includes a plurality of scaled-down pages is displayed, so that the user can quickly select the target page, to reduce a user operation.

To be specific, in some embodiments, when detecting a third user operation of moving the first application icon to an edge of a screen and out of the first page, the electronic device displays the interface of the L scaled-down pages on the screen.

With reference to the second aspect, in some embodiments, after the electronic device changes the arrangement of the first application icon to the second location on the second page, the electronic device displays, on the screen, the first application icon arranged at the second location on the second page.

With reference to the second aspect, in some embodiments, before the electronic device changes the arrangement of the first application icon to the second location on the second page, the second application icon is arranged at the second location. When the electronic device changes arrangement of the first application icon to a second location on the second page, the second application icon is moved to a location next to the second location.

In some embodiments, before and after the electronic device detects the first user operation, the display size of the first application icon may remain unchanged, or may change dynamically with a size of another application icon on the first interface.

Optionally, in a process of moving the first application icon, the electronic device may dynamically adjust an arrangement layout of each page included on the interface of the L pages, that is, dynamically change an arrangement status of each page on the interface. For example, when nine pages are displayed on the interface, the nine pages may be arranged in a nine-square grid shape; when four pages are displayed on the interface, the four pages may be arranged in a square block shape; or the like.

In some embodiments, the electronic device detects that the movement operation of moving the first application icon to the scaled-down second page is an operation of selecting the second page, which may be, for example, that the user drags the first application icon to an area of the scaled-down second page for a period of time, for example, 1 second.

In some other embodiments, when detecting that the user moves the first application icon to and selects the second page that includes the interface of L pages, the electronic device directly displays a case that the first application icon is changed to the second page. In this case, the user does not need to drag the first application icon on the scaled-up second page. Alternatively, after the user moves the first application icon to and selects the second page that includes the interface of L pages, the user releases the first application icon. Then, a case that the first application icon is changed to the second page is directly displayed. In this case, the user does not need to drag the first application icon on the scaled-up second page.

In some embodiments, the second user operation of releasing the first application icon may be an operation of releasing a finger by the user from a display.

In some other embodiments, in a process of moving the first application icon, if the user wants to give up moving the first application icon, the user may release the first application icon in a state in which no target page is selected, for example, release the first application icon in a blank area outside a page area that includes the interface of L pages, so that the first application icon may return to an initial location, and the first interface exits from an icon editing state.

According to a third aspect, an embodiment of this application provides an electronic device. The electronic device may include a sensor, a display, a memory, a processor coupled to the memory, a plurality of applications, and one or more programs. The sensor is configured to detect a user operation, the display is configured to display an interface, the memory stores computer-executable instructions, and when the processor executes the instructions, the electronic device is enabled to implement any function of the electronic device in the first aspect or the electronic device in the second aspect.

According to a fourth aspect, an embodiment of this application provides a computer storage medium. The storage medium stores a computer program. The computer program includes executable instructions. When the executable instructions are executed by a processor, the processor is enabled to perform an operation corresponding to the method provided in the first aspect or the second aspect.

According to a fifth aspect, an embodiment of this application provides a computer program product. When the computer program product runs on an electronic device, the electronic device is enabled to perform any possible implementation of the first aspect or the second aspect.

According to a sixth aspect, an embodiment of this application provides a chip system. The chip system may be applied to an electronic device. The chip includes one or more processors, and the processor is configured to invoke computer instructions, so that the electronic device implements any possible implementation of the first aspect or the second aspect.

By implementing the foregoing aspects provided in this application, the user can quickly locate the target location in a process of moving the application icon. The method provides the more convenient, quicker, and more user-friendly interface operation manner, reduces the time for dragging the application icon to the target location, improves human-computer interaction performance, facilitates the user operation, and improves user experience.

### BRIEF DESCRIPTION OF DRAWINGS

FIG. 1A is a schematic diagram of a hardware structure of an electronic device according to an embodiment of this application;
FIG. 1B is a schematic diagram of a software architecture of an electronic device according to an embodiment of this application;
FIG. 2Ais a schematic diagram of a user interface according to an embodiment of this application;
FIG. 2B is a schematic diagram of a user interface according to an embodiment of this application;
FIG. 2C is a schematic diagram of a user interface according to an embodiment of this application;
FIG. 3A is a schematic diagram of a user interface according to an embodiment of this application;
FIG. 3B is a schematic diagram of a user interface according to an embodiment of this application;
FIG. 4 is a schematic diagram of a user interface according to an embodiment of this application;
FIG. 5A is a schematic diagram of a user interface according to an embodiment of this application;
FIG. 5B is a schematic diagram of a user interface according to an embodiment of this application;
FIG. 6 is a schematic diagram of a user interface according to an embodiment of this application;
FIG. 7 is a schematic diagram of a user interface according to an embodiment of this application;
FIG. 8 is a schematic diagram of a user interface according to an embodiment of this application;
FIG. 9 is a schematic diagram of a user interface according to an embodiment of this application;
FIG. 10(a) to FIG. 10(d) are a schematic diagram of a user interface according to an embodiment of this application;
FIG. 11A is a schematic diagram of a user interface according to an embodiment of this application;
FIG. 11B is a schematic diagram of a user interface according to an embodiment of this application;
FIG. 12(a) to FIG. 12(f) are a schematic diagram of a user interface according to an embodiment of this application;
FIG. 13(a) to FIG. 13(e) are a schematic diagram of a user interface according to an embodiment of this application;
FIG. 14(a) to FIG. 14(f) are a schematic diagram of a user interface according to an embodiment of this application;
FIG. 15A is a flowchart of an icon moving method according to an embodiment of this application;
FIG. 15B is a flowchart of an icon moving method according to an embodiment of this application; and
FIG. 16 is a schematic diagram of a functional module according to an embodiment of this application.

### DESCRIPTION OF EMBODIMENTS

The following clearly describes the technical solutions in embodiments of this application in detail with reference to the accompanying drawings. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In addition, in descriptions of embodiments of this application, "a plurality of" means two or more than two.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is generally represented in a form of a graphical user interface (graphical user interface, GUI), and is a user interface that is related to a computer operation and that is displayed graphically. The user interface may be a visual interface element, for example, a text, an icon, a button, a menu, a tab, a text box, a dialog box, a status bar, a navigation bar, or a Widget that is displayed on a display of the electronic device.

In the following embodiments of this application, an application icon is a control indicating an application, may be displayed as a personalized image, and is one of entries for invoking an application by the user. An application may be quickly opened and an application interface of the application may be displayed by tapping an application icon corresponding to the application.

A plurality of application icons may be displayed neatly and orderly on one interface. For example, a plurality of application icons in a mobile phone may be distributed on a plurality of pages of a home screen. The user may switch between different pages of the home screen to find a target application icon, and then may drag the application icon to move from a start location to a target location. If the start location and the target location are located in discontinuous pages, the user also needs to drag the application icon through a middle page. This causes low moving efficiency. For another example, all application icons in a smartwatch may be placed on an application icon interface, and the user may drag an application icon to move a location of the application icon. Because of a small screen of the smartwatch, when there are many application icons, if a start location and a target location of the moved application icon are far away from each other and cannot be simultaneously displayed on one interface, it is difficult for the user to determine the target location when dragging the application icon. In this case, the user needs to continuously drag the application icon to an edge of the screen, so that more application icons are displayed in scrolling mode on the interface, to find the target location. This causes low accuracy of finding the target location and reduces operation experience of the user.

This application provides an icon moving method, which is applied to an electronic device provided in this application. The electronic device provided in this application may include but is not limited to a portable terminal device, for example, a mobile phone, a tablet computer, a wearable device like a smartwatch or a smart band, or a non-portable terminal device like a laptop (laptop) having a touch-sensitive surface or a touch panel, or a desktop computer having a touch-sensitive surface or a touch panel.

In a process in which a user moves an icon, the icon moving method may support the electronic device in appropriately adjusting an interface layout to scale down an application icon in a specific ratio, so as to display all application icons on one interface or display more application icons than those displayed on the interface before the icon is moved, so that the user can quickly confirm a target location of the icon in the process of moving the application icon. The icon moving method may further support the electronic device in dynamically scaling up or down a size of an application icon on an interface based on a speed at which the user drags the application icon.

By implementing the method provided in this application, the user can quickly locate the target location in a process of moving the application icon. The method provides a more convenient, quicker, and more user-friendly interface operation manner, reduces time for dragging the application icon to the target location, improves human-computer interaction performance, facilitates a user operation, and improves user experience.

The following describes an example electronic device 100 provided in an embodiment of this application.

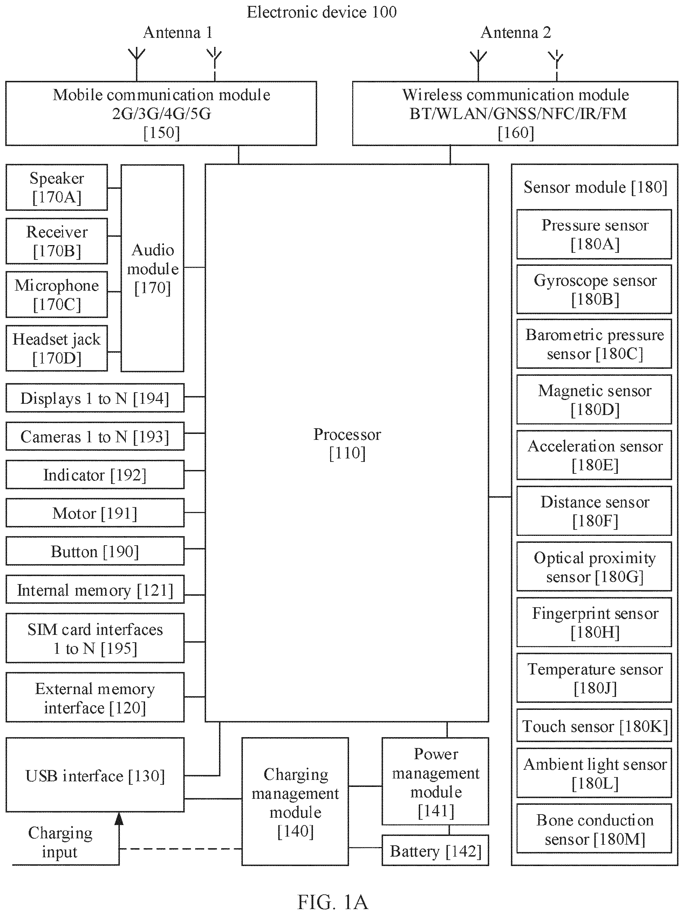

FIG. 1A is a schematic diagram of a hardware structure of the electronic device 100 according to an embodiment of this application. The example electronic device 100 provided in this embodiment of this application may be provided with a display apparatus, which may be, but is not limited to a mobile phone, a notebook computer, a tablet computer (portable Android device, PAD), a smart band, a smartwatch, a personal computer (personal computer, PC), or a smart television (also referred to as a smart screen, a large screen, and the like), and may also be a smart speaker, an electronic photo frame, a desktop computer, a laptop computer, a handheld computer, an augmented reality (augmented reality, AR) device, a virtual reality (virtual reality, VR) device, an artificial intelligence (artificial intelligence, AI) device, a head unit (vehicle-mounted device), a game machine, a treadmill, a cloud host/a cloud server, another intelligent wearable device, an internet of things (internet of things, IOT) device, or a smart home device like a smart water heater, a smart lamp, a smart air conditioner, a smart scale, or another type of electronic device. This is not limited in this application. In this embodiment, a terminal device may also be briefly referred to as a terminal. The terminal device is usually an intelligent electronic device that can provide a user interface, interact with a user, and provide a service function for the user.

It may be understood that a structure shown in this embodiment does not constitute a specific limitation on the electronic device 100. In some other embodiments of this application, the electronic device 100 may include more or fewer components than those shown in the figure, or add or delete some hardware structures, or combine some components, or split some components, or have different component arrangements. The components shown in the figure may be implemented by hardware, software, or a combination of software and hardware.

Refer to FIG. 1A. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 is generally configured to control an overall operation of the electronic device 100, and may include one or more processing units. For example, the processor 110 may include a central processing unit (central processing unit, CPU), an application processor (application processor, AP), a modem processor, a graphics processing unit (graphics processing unit, GPU), an image signal processor (image signal processor, ISP), a video processing unit (video processing unit, VPU), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on instruction operation code and a time sequence signal, to control instruction reading and instruction execution.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device, for example, image recognition, facial recognition, speech recognition, and text understanding, can be implemented by using the NPU.

The memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, a serial peripheral interface (serial peripheral interface, SPI), and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may send an audio signal to the wireless communication module 160 through the I2S interface.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also send an audio signal to the wireless communication module 160 through the PCM interface. Both the I2S interface and the PCM interface are configured to perform audio communication.

The UART interface is a universal serial data bus, and is configured to perform asynchronous communication. The bus may be a two-way communication bus. The bus converts to-be-transmitted data between serial communication and parallel communication.

In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may send an audio signal to the wireless communication module 160 through the UART interface, to implement a function of playing audio.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device. The processor 110 communicates with the display 194 through the DSIinterface, to implement a display function of the electronic device.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device, or may be configured to exchange data between the electronic device and a peripheral device. The USB interface 130 may be further configured to connect to another electronic device like a mobile phone, a PC, and a smart television. The USB interface may be a USB 3.0, and is configured to be compatible with a high-speed display port (display port, DP) for signal transmission, and may transmit high-speed audio and video data.

It can be understood that an interface connection relationship between modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the electronic device. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes a second generation (2nd generation, 2G) network, a third generation (3rd generation, 3G) network, a fourth generation (4th generation, 4G) network, a fifth generation (5th generation, 5G) network, or the like and that is applied to the electronic device 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another function module.

The wireless communication module 160 may provide a wireless communication solution that includes a wireless local area network (wireless local area network, WLAN) (for example, a wireless fidelity (wireless fidelity, Wi-Fi) network), a Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and connects the display 194 to the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may have a touch-sensitive surface or a touch-sensitive panel, and may detect a touch control operation of the user. One or more application icons may be displayed on the display 194. When an operation of moving an application icon by the user on the display 194 is detected, an interface of the application icon scaled up and down in a specific ratio may be displayed on the display 194, so that the user quickly locates a target location of the application icon.

The electronic device 100 may implement a photographing function through the ISP, the camera 193, the video codec, the GPU, the display 194, the application processor, and the like.

The ISP may be configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1. The camera 193 may include, but is not limited to a conventional red green blue camera (RGB camera), a depth camera (RGB depth camera), and a dynamic vision sensor (dynamic vision sensor, DVS) camera. In some embodiments, the camera 193 may be the depth camera. The depth camera can collect spatial information of a real environment.

In some embodiments, the electronic device 100 may capture a user image by using the camera 193, perform facial recognition on different users, and correspondingly enable different user accounts in which information of different users is stored. This can ensure that the different user accounts are not confused, and user data privacy is further protected.

In some embodiments, the camera 193 may capture a hand image or a body image of the user, and the processor 110 may be configured to analyze the image captured by the camera 193, to identify a hand movement or a body movement input by the user. For example, the processor may identify the hand movement of the user by using the camera 193, to control a user gesture.

The internal memory 121 may be configured to store computer-executable program code. The executable program code includes instructions. The processor 110 runs the instructions stored in the internal memory 121, to perform various function applications of the electronic device and data processing. The internal memory 121 may include a program storage area and a data storage area. The program storage area may store an operating system, an application required by at least one function (for example, a voice playing function or an image playing function), and the like. The data storage area may store data (such as audio data and a phone book) and the like created when the electronic device is used.

In some embodiments of this application, the internal memory 121 may be configured to store one or more applications. The one or more applications include instructions. When the application is executed by the processor 110, the electronic device 100 generates content to be presented to the user. For example, the application may include an application for managing the electronic device 100, for example, a game application, a conference application, a video application, a desktop application, or another application.

The internal memory 121 may include one or more random access memories (random access memory, RAM) and one or more non-volatile memories (non-volatile memory, NVM).

The random access memory is featured by a fast read/write speed and volatility. The volatility means that data stored in the RAM disappears when a power failure occurs. Generally, the random access memory has extremely low static power consumption and extremely high operating power consumption. The data in the RAM is memory data that can be read at any time and disappears when a power failure occurs.

The non-volatile memory is featured by non-volatility and stable storage data. The non-volatility means that after a power failure occurs, the stored data does not disappear and can be stored for a long time. The data in the NVM includes application data, and may be stably stored in the NVM for a long time. The application data is content written in a running process of an application or a service process, for example, a photo or a video obtained by a photographing application, and a text edited by the user in a document application.

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is generally referred to as a DDR5 SDRAM), and the like.

The non-volatile memory may include a magnetic disk storage (magnetic disk storage), a flash memory (flash memory), and the like.

The magnetic disk storage is a storage that uses a magnetic disk as a storage medium, and is featured by a large storage capacity, a high data transmission rate, and a long-term data storage period.

The flash memory may be classified into an NOR FLASH, an NAND FLASH, a 3D NAND FLASH, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (universal flash storage, UFS), an embedded multimedia card (embedded multimedia card, eMMC), and the like according to storage specifications.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, to extend a storage capability of the electronic device. The external non-volatile memory communicates with the processor 110 through the external memory interface 120, to implement a data storage function. For example, files such as music and videos are stored in the external non-volatile memory.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device may be configured to listen to music or answer a call in a hands-free mode over the speaker 170A.

The receiver 170B, also referred to as an "earpiece", is configured to convert an electrical audio signal into a sound signal. When a call is answered or voice information is received by using the electronic device, the receiver 170B may be put close to a human ear to receive a voice.

The microphone 170C, also referred to as a "mike" or a "mic", is configured to convert a sound signal into an electrical signal. When making a call or sending voice information, a user may make a sound near the microphone 170C through the mouth, to input a sound signal to the microphone 170C. At least one microphone 170C may be disposed in the electronic device. In some other embodiments, two microphones 170C may be disposed in the electronic device, to implement a noise reduction function in addition to capturing a sound signal. In some other embodiments, three, four, or more microphones 170C may alternatively be disposed in the electronic device, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The electronic device 100 may include one or more buttons 190. These buttons 190 may control the electronic device 100, and allow the user to access a function on the electronic device 100. The button 190 may be a mechanical button, for example, a button, a switch, or a dial, or may be a touch or near-touch sensing device (for example, a touch sensor). The electronic device 100 may receive a button input, and generate a button signal input related to user setting and function control of the electronic device 100. The button 190 may include a power button, a volume button, and the like.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. For touch operations performed on different areas of the electronic device 100, the motor 191 may alternatively correspond to different vibration feedback effects. Different application scenarios (for example, a time reminder, information receiving, an alarm clock, and a game) may alternatively correspond to different vibration feedback effects. A touch vibration feedback effect may be further customized.

The indicator 192 may be an indicator light, and may be configured to indicate a charging state and a power change, or may be configured to indicate a message, a notification, and the like.

The electronic device 100 may further include another input/output interface, and another apparatus may be connected to the electronic device 100 through a proper input/output interface. The component may include, for example, an audio/video jack and a data connector.

The electronic device 100 is provided with one or more sensors that include but are not limited to a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and a bone conduction sensor 180M.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on a change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messages application icon, an instruction for viewing an SMS message is performed. When a touch operation whose touch operation intensity is greater than or equal to a first pressure threshold is performed on a messages application icon, an instruction for creating a new SMS message is performed. In some embodiments, touch operations that are performed at a same touch location but have different touch operation time lengths may correspond to different operation instructions. For example, when a touch operation whose time length is less than a first time threshold is performed on the pressure sensor 180A, a confirmation instruction is executed. When a touch operation whose time length is greater than or equal to a first time threshold is performed on the pressure sensor 180A, a power-on/power-off instruction is executed.

The gyroscope sensor 180B may be configured to determine a moving posture of the electronic device 100. In some embodiments, an angular velocity of the electronic device around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device jitters, calculates, based on the angle, a distance for which a lens module needs to compensate, and allows the lens to cancel the jitter of the electronic device through reverse motion, to implement image stabilization. The gyroscope sensor 180B may also be used in a navigation scenario and a somatic game scenario. In some embodiments, the electronic device 100 may confirm, by using the gyroscope sensor 180B, an instruction for switching a previous/next display option.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature, for example, automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer. In some embodiments, the electronic device 100 may confirm, by using the acceleration sensor 180E, the instruction for switching the previous/next display option.

The distance sensor 180F is configured to measure a distance. The electronic device 100 may measure the distance in an infrared manner or a laser manner. In some embodiments, in a photographing scenario, the electronic device 100 may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may implement fingerprint unlocking, access to an application lock, fingerprint-based photographing, fingerprint-based call answering, and the like based on features of the collected fingerprint.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device degrades performance of a processor near the temperature sensor 180J, to reduce power consumption and implement thermal protection. In some other embodiments, when the temperature is less than another threshold, the electronic device 100 heats the battery 142 to avoid an abnormal shutdown of the electronic device 100 caused by a low temperature. In some other embodiments, when the temperature is lower than still another threshold, the electronic device 100 boosts an output voltage of the battery 142 to avoid an abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

The electronic device 100 may run an Android^{®} system, a Windows^{®} system, iOS^{®}, macOS^{®}, a Linux^{®} system, HarmonyOS, or another type of operating system. This is not limited in this application.

A software system of the electronic device 100 may use a layered architecture, an event-driven architecture, a microkernel architecture, a micro service architecture, or a cloud architecture. In this embodiment of this application, an Android system with the layered architecture is used as an example to illustrate a software structure of the electronic device 100.

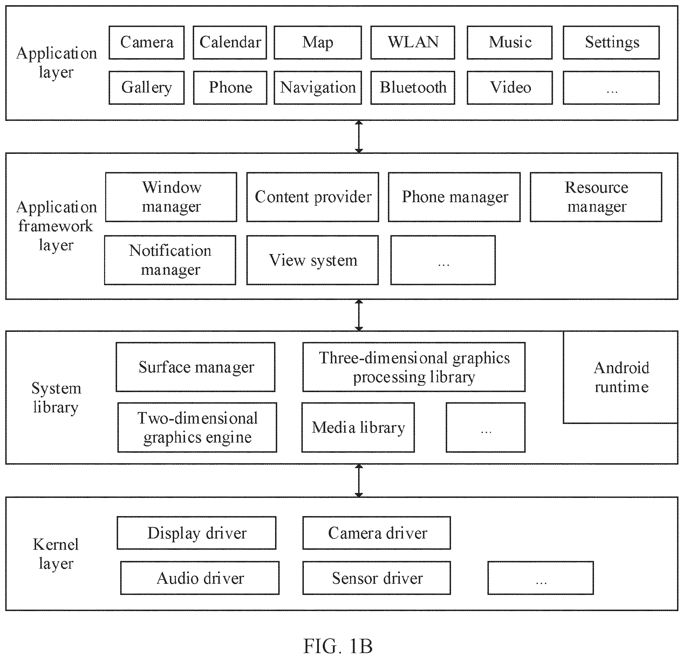

FIG. 1B is a block diagram of the software structure of the electronic device 100 according to this embodiment of this application.

In the layered architecture, software is divided into several layers, and each layer has a clear role and task. The layers communicate with each other through a software interface. In some embodiments, the Android^{®} system may be divided into four layers: an application layer, an application framework layer, an Android^{®} runtime (Android^{®} runtime) and system library, and a kernel layer from top to bottom.

The application layer may include a series of application packages.

As shown in FIG. 1B, the application packages may include applications such as Camera, Gallery, Calendar, Phone, Map, Navigation, WLAN, Bluetooth, Music, Video, and Settings. A font size, a thickness, and the like may be set in the Setting application.

The application framework layer provides an application programming interface (application programming interface, API) and a programming framework for an application at the application layer. The application framework layer includes some predefined functions.

As shown in FIG. 1B, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, a phone book, and the like.

The view system includes a visual control, for example, a control for displaying a text or a control for displaying a picture. The view system may be configured to construct an application. A display interface may include one or more views. For example, a display interface including a messages notification icon may include a text display view and a picture display view.

The phone manager is configured to provide a communication function, for example, management of call states (including answering, declining, and the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on the background, or a notification that appears on a screen in a form of a dialog window. For example, text information is displayed in the status bar, an announcement is given, the electronic device vibrates, or the indicator light blinks.

Android^{®} Runtime includes a kernel library and a virtual machine. Android^{®} runtime is responsible for scheduling and management of the Android system.

The kernel library includes two parts: a function that needs to be invoked in Java language, and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of common audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

A working procedure of cooperation between software and hardware of the electronic device 100 is described herein by way of example with reference to a photographing-starting scenario.

When the touch sensor 180K receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation and a control corresponding to the touch tap operation is a control of a camera application icon. A camera application invokes an interface at the application framework layer, to start the camera application. Then, the camera driver is started by invoking the kernel layer, and a static image or a video is captured by using the camera 193.

The foregoing descriptions of the software architecture of the electronic device 100 are merely an example. It may be understood that the software architecture shown in this embodiment of the present invention does not constitute a specific limitation on this application. In some other embodiments of this application, the software architecture of the electronic device 100 may include more or fewer modules than those shown in the figure, or combine some modules, or split some modules, or have different architectural arrangements. The components shown in the figure may be implemented by hardware, software, or a combination of software and hardware.

An embodiment of this application provides an interaction manner of moving an application icon, to provide a faster and more convenient interaction interface and more easy-to-operate and more user-friendly interaction experience for a user. In this embodiment of this application, in a process in which the user moves an icon, the electronic device 100 appropriately adjusts an interface layout to scale down an application icon in a specific ratio, so as to display all application icons on one interface or display more application icons than those displayed on the interface before the icon is moved, so that the user can quickly confirm a target location of the icon in the process of moving the application icon. In some embodiments, the electronic device 100 may further dynamically scale up or down a size of the application icon on the interface based on a speed at which the user drags the application icon. A scaling ratio of the application icon is not limited in embodiments of this application.

The following describes the technical solutions of this application in detail with reference to the accompanying drawings.

In the following embodiments provided in this application, an example in which the electronic device 100 is a smartwatch or a mobile phone is used for description. It may be understood that a plurality of embodiments described by using the smartwatch or the mobile phone as an example in this application do not constitute any limitation on other embodiments, a device type of the electronic device 100 may be another device, and solutions that can implement an inventive concept of this application shall fall within the protection scope of this application.

In this embodiment of this application, the electronic device 100 may be provided with a display that has a touch function. One or more applications are installed on the electronic device 100, and a plurality of application functions may be provided. A plurality of graphical interfaces such as a desktop and a plurality of application icons may be displayed on the display of the electronic device 100. The electronic device 100 may further support collection and identification of user operations such as a touch, a gesture, and a voice, and convert the user operations into corresponding instructions. For example, the display of the electronic device 100 may identify a touch operation. When a user operation of selecting and dragging an application icon on a touchscreen is detected, the application icon may be correspondingly moved from a start location to a target location specified by the user.

In embodiments of this application, a display of the smartwatch may also be referred to as a "watch face".

It may be understood that user interfaces described in the following embodiments of this application are merely example interfaces, and do not constitute limitation on other embodiments of this application. In other embodiments, the user interface may have different interface layouts, more or fewer controls may be included, and other function options may be added or deleted. The following example interface may also be migrated to another type of device, which falls within the protection scope of this application, provided that the example interface is based on a technical solution of a same idea provided in this application.

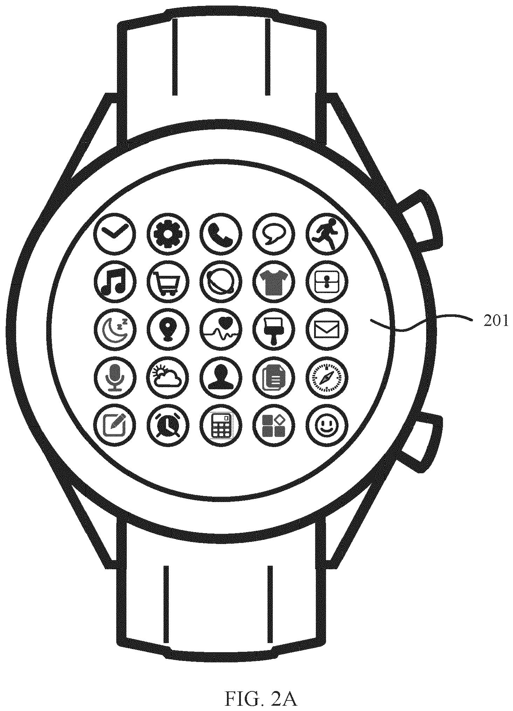

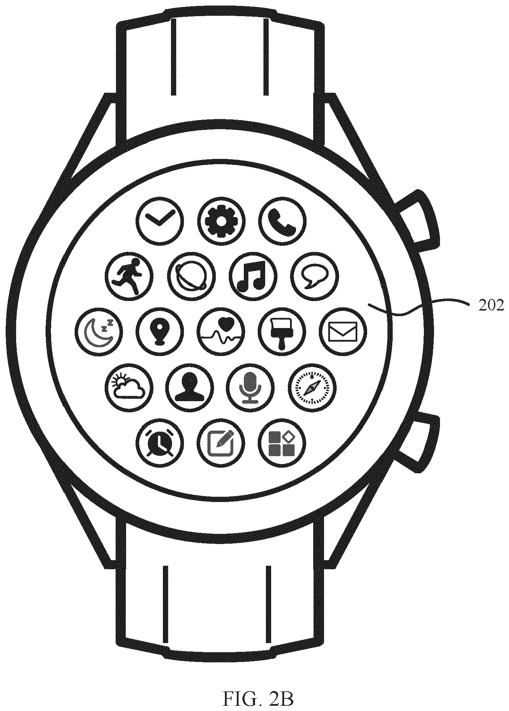

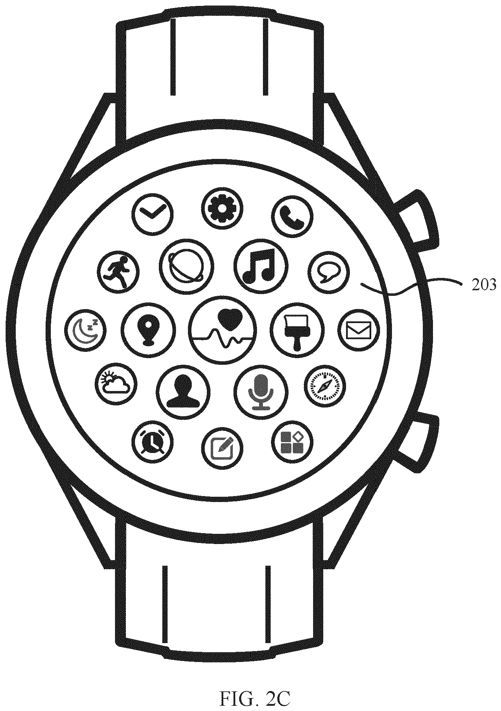

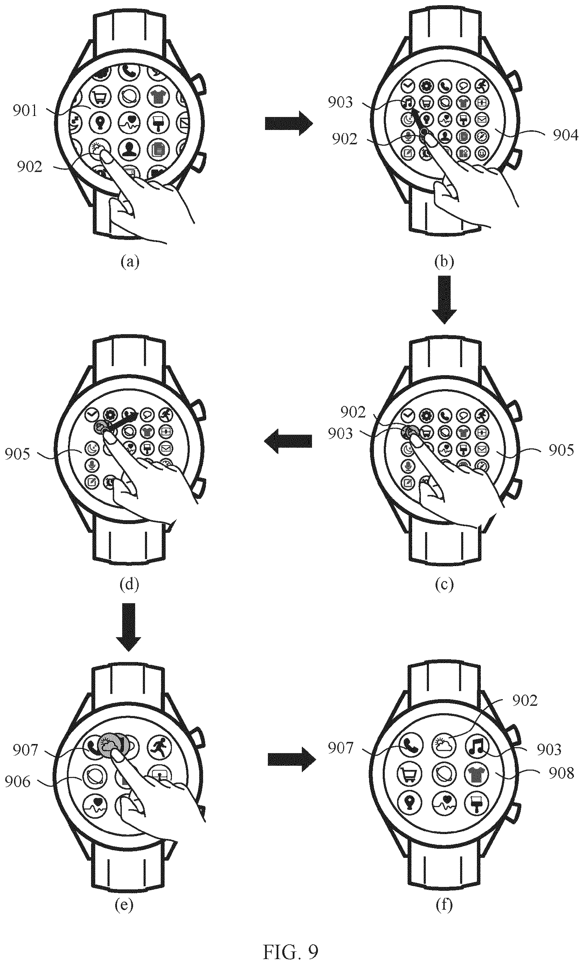

An icon moving method provided in this application may be applied to a smartwatch. FIG. 2Ato FIG. 9 describe related graphical interfaces provided in embodiments of this application by using the smartwatch as an example electronic device.

Embodiments shown in FIG. 2A to FIG. 9 mainly relate to a user interface for displaying application icons corresponding to all applications installed on the smartwatch. The user interface may be written as an icon interface in the following embodiments of this application. In embodiments of this application, the icon interface may also be written as a first interface.

FIG. 2A to FIG. 2C are examples of schematic diagrams of an icon interface displayed on the screen of the electronic device 100 (namely, the smartwatch). Application icons may have different arrangement manners and different display sizes on the icon interface.

Refer to a watch face interface 201 shown in FIG. 2A. The watch face interface 201 is an icon interface of the smartwatch, and icons of installed applications may be displayed on the watch face interface 201. The user may tap an application icon on the watch face interface 201 to open a corresponding application. A shape of the application icon is not limited in embodiments of this application. For example, the application icon may be a round icon, a square icon, or the like. An image of the application icon may be a static image or a dynamic image, and a representation form of the application icon is not limited in embodiments.

As shown in FIG. 2A, one or more application icons, for example, a clock application icon, a setting application icon, a music application icon, a browser application icon, a sports application icon, a weather application icon, and a mailbox application icon, may be displayed on the watch face interface 201. An arrangement layout manner of the plurality of application icons is not limited in embodiments of this application. For example, the arrangement manner of the plurality of application icons may be a row-column alignment shape, a honeycomb shape, or another arrangement layout manner.

For example, as shown in FIG. 2A, an arrangement layout of the plurality of application icons displayed on the watch face interface 201 is the row-column alignment shape. The row-column alignment shape means that locations of the plurality of icons are aligned up and down, left and right, and each icon is surrounded by eight icons in a nine-square grip shape.

For another example, as shown in FIG. 2B, an arrangement layout of a plurality of application icons displayed on a watch face interface 202 is a honeycomb shape. The honeycomb shape means that each icon is surrounded by six icons in a hexagonal honeycomb shape.

A di splay size of the application icon is not limited in embodiments of this application. Sizes of application icons displayed on a watch face interface of the smartwatch may be consistent or inconsistent.

For example, as shown in FIG. 2A and FIG. 2B, a plurality of application icons displayed on the watch face interface 201 and the watch face interface 202 have consistent icon sizes.

For another example, as shown in FIG. 2C, a plurality of application icons are displayed on a watch face interface 203. Icon sizes of the plurality of application icons decrease from a center to a boundary, and are in a radial distribution. A display size of an application icon located in the center is the largest, and display sizes of other application icons decrease from the center to the boundary. A display size of an application icon that is closer to the center is larger, and a display size of an application icon that is closer to the boundary is smaller.

For example, the icon displayed in the center of the watch face interface 203 is a health application icon, the display size of the application icon is the largest, and sizes of a music application icon and a browser application icon around the health application icon are smaller than that of the health application icon. A plurality of application icons such as a clock application icon and a setting application icon are located at the boundary of the watch face interface 203. Display sizes of these application icons located at the boundary are the smallest, and are smaller than that of the music application icon or the browser application icon.

Not limited to the solutions shown in FIG. 2A to FIG. 2C, an arrangement manner of application icons on an icon interface displayed on the watch face of the smartwatch may alternatively be another arrangement manner like ring arrangement, and the application icons may also have more different display sizes.

The user may scale up or down application icons on the watch face interface by rotating a watch crown or another button of the smartwatch. Alternatively, the user may scale up or down application icons on the watch face interface through a touch operation or a gesture operation. When a scaling-up operation is performed, a size of the application icons on the watch face interface becomes larger, and a quantity of application icons displayed on the watch face interface may decrease. When a scaling-down operation is performed, a size of the application icons on the watch face interface becomes smaller, and a quantity of application icons displayed on the watch face interface may increase.

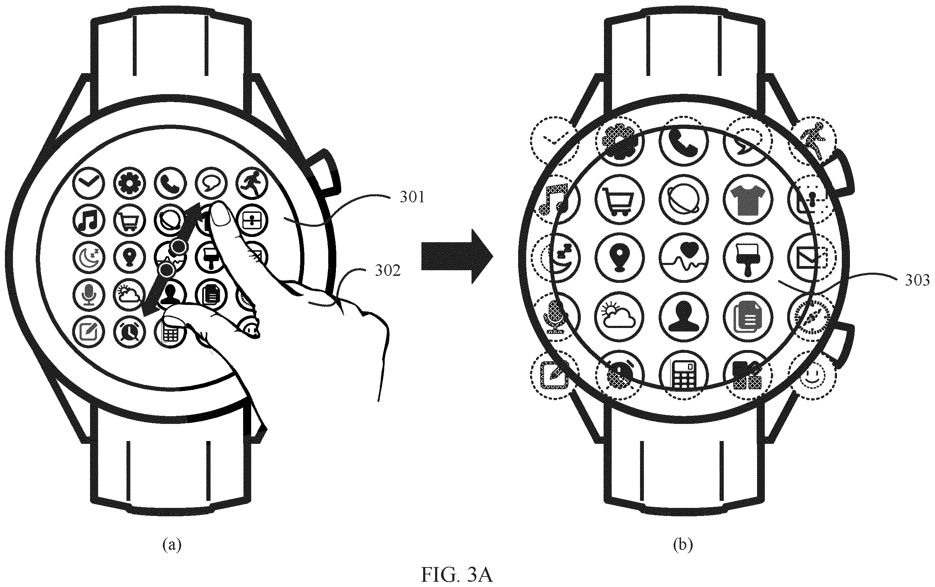

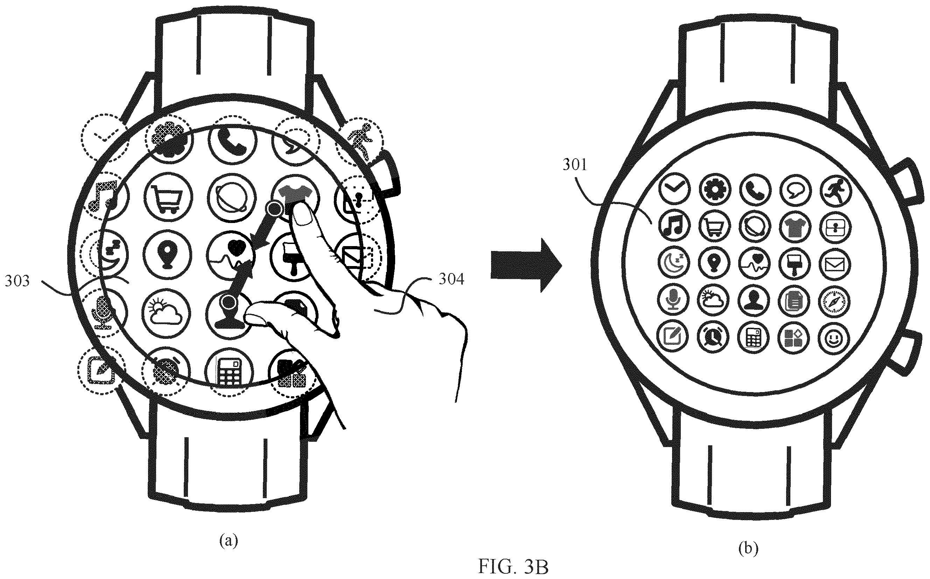

FIG. 3A and FIG. 3B show an example embodiment in which the smartwatch displays scaled-up or scaled-down application icons on the watch face after identifying an operation performed by the user to scale up or down a size of the application icons.

For example, as shown in (a) in FIG. 3A, the smartwatch displays a watch face interface 301. A plurality of application icons are displayed on the watch face interface 301 and the plurality of application icons are displayed on the watch face interface 301 in a size 1.

When a scaling-up operation 302 performed by the user on the watch face interface 301 is detected, as shown in (b) in FIG. 3A, the smartwatch displays a watch face interface 303. The plurality of scaled-up application icons are displayed on the watch face interface 303. Sizes of these application icons may be a size 2. The size 2 is greater than or equal to the size 1.

The scaling-up operation 302 may be a touch operation of swiping two fingers in opposite directions on the screen, as shown in FIG. 3A, and a larger distance between the two fingers in the swipe process indicates a larger scaling-up ratio of the application icons. When the application icons are scaled up to a maximum threshold, even if a scaling-up operation of swiping two fingers by the user in the opposite directions on the screen of the smartwatch is detected again, the application icons displayed on the watch face interface of the smartwatch are no longer scaled up. The maximum threshold is a maximum display size of the application icons that is set in the smartwatch. For example, when the application icons are displayed in the maximum size, only one complete application icon may be displayed on the screen of the smartwatch.

The scaling-up operation 302 allows the user to observe details more conveniently.

It should be noted that all scaled-up application icons generally cannot be displayed on the watch face interface of the smartwatch when there are a large quantity of application icons. As shown in (b) in FIG. 3A, incomplete application icons are displayed on the screen of the smartwatch, and more application icons are not displayed on the screen. In (b) in FIG. 3A, dashed lines indicate application icons that are not displayed and parts that are of some application icons and that are not completely displayed.

Conversely, the scaling-down operation makes a size of application icons in the smartwatch smaller, to display more application icons on the screen.

As shown in (a) in FIG. 3B, when a scaling-up operation 304 performed by the user on the watch face interface 303 is detected, as shown in (b) in FIG. 3B, the smartwatch displays the watch face interface 301, and a plurality of scaled-down application icons are displayed on the watch face interface 301. The size of the application icons on the watch face interface 303 may be the size 2, a size of the application icons on the watch face interface 301 may be the size 1, and the size 2 is greater than or equal to the size 1.

The scaling-down operation 304 may be a touch operation of pinching and swiping two fingers toward a same location on the screen, as shown in FIG. 3B, and a smaller distance between the two fingers in the swipe process indicates a larger scaling-down ratio of the application icons. When the application icons are scaled down to a minimum threshold, even if a scaling-down operation of pinching the two fingers by the user on the screen of the smartwatch is detected again, the application icons displayed on the watch face interface of the smartwatch are no longer scaled down. The minimum threshold is a minimum display size of the application icons that is set in the smartwatch. For example, when the application icons are displayed in the minimum size, all application icons can be displayed on the screen of the smartwatch.

The scaling-down operation 304 allows the user to observe an overall effect more conveniently.

The scaling-up operation and the scaling-down operation allow the user to adjust and view an application icon more conveniently as required. The user can also drag the watch face interface to adjust a field of view of the interface and display other application icons. The foregoing descriptions of user operations are merely examples for description, and these examples do not constitute any limitation on user operations in other embodiments.

An operation in which the user changes a display size of the application icons is not limited to the solutions shown in FIG. 3A and FIG. 3B, and may alternatively be another operation (for example, a gesture or a voice). This is not limited in embodiments of this application.

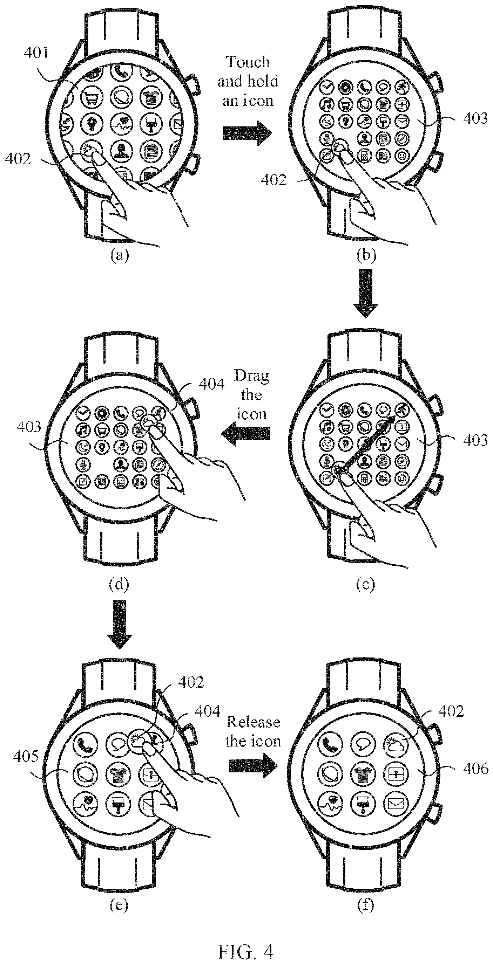

FIG. 4 shows an example of an embodiment of moving an application icon on the smartwatch.

(a) and (b) in FIG. 4 show an embodiment in which the smartwatch displays application icons on more icon interfaces on the watch face interface after identifying an intention of the user to move a first application icon.

In this embodiment of this application, the smartwatch may identify an intention of the user to move an application icon through a user operation of selecting the application icon without release, or the smartwatch may identify an intention of the user to move an application icon through a user operation of selecting and dragging the application icon.

In some embodiments of this application, when an operation of selecting an application icon by the user is detected, the smartwatch may enter an icon editing state, to facilitate the user to move the selected application icon.

In some embodiments, the smartwatch may display the application icons on the interface of more icons on the watch face interface by scaling down a distance between the application icons on the watch face interface. In some other embodiments, the smartwatch may alternatively display the application icons on the interface of more icons on the watch face interface by scaling down a size of the application icons on the watch face interface.

In some embodiments, when an operation of selecting an application icon by the user is detected, the application icon may be scaled down in a first ratio, and the application icon is displayed in a first size. In this case, all application icons may be displayed on the watch face interface.

In some embodiments, when an operation of selecting an application icon by the user is detected, the application icon may be scaled down in a second ratio, and the application icon is displayed in a second size, where the first ratio is greater than the second ratio, and the first size is less than the second size. In this case, some application icons may be displayed on the watch face interface, and a quantity of application icons displayed on the watch face interface is greater than a quantity of icons displayed on the watch face interface before the smartwatch detects a selection operation of the user.

For example, as shown in FIG. 4, a watch face interface 401 is displayed in (a) in FIG. 4, and the watch face interface 401 includes a plurality of complete or incomplete application icons, for example, a map application icon, a weather application icon 402, a browser application icon, a sports application icon, and a health application icon.

When a touch and hold operation performed by the user on the first application icon is detected, for example, the smartwatch detects a touch and hold operation performed by the user on the weather application icon 402, as shown in (b) in FIG. 4, the smartwatch may display a watch face interface 403. A scaled-down application icon is displayed on the watch face interface 403. The watch face interface 403 may be used to edit the application icon on the interface, for example, move a location of the application icon. The watch face interface 403 is in a global state. The global state means that application icons of all applications on the smartwatch are displayed on the watch face interface 403, and all the application icons are displayed on the watch face interface 403 in the first size.

It should be noted that an operation of selecting the first application icon and triggering to enter the icon editing state is not limited to the touch and hold operation described in the example, and may alternatively be another operation. This is not limited in this embodiment.

It should be noted that, when the touch and hold operation performed by the user on the first application icon may further trigger another function, a time length or a pressure value of the touch and hold operation may be used to distinguish a home screen editing function from the another function. For example, when the first application icon is touched and held for 0.5 second, the application may be triggered to display an application shortcut function control; and when the first application icon is touched and held for 1 second, the smartwatch may enter a home screen editing state, and the user can move a location of the application icon. Alternatively, when a pressure value of the touch and hold operation on the first application icon is greater than a first pressure value, the application may be triggered to display an application shortcut function control; and when the pressure value of the touch and hold operation on the first application icon is greater than a second pressure value, the application may be triggered to enter a home screen editing state, where the first pressure value is different from the second pressure value.

In some other embodiments, sizes of the icons on the watch face interface may be different. In this case, when it is detected that the first application icon is selected to enter an icon editing interface, the application icons displayed on the icon editing interface may be separately scaled down in a specific ratio. That is, a size of each icon becomes smaller after selection. Alternatively, the application icons displayed on the icon editing interface may be displayed in a same size. After selection, a size of some icons may become smaller, a size of some icons may become larger, and a size of some icons may remain unchanged.

A quantity of application icons included on the icon editing interface should be greater than or equal to that of application icons on an interface before being in the icon editing state, to facilitate the user to search for a target location.

In FIG. 4, after the smartwatch identifies an operation of dragging the first application icon by the user on an icon interface, the first application icon may be moved along a drag track of the user.

On the watch face interface 403, as shown in (b) in FIG. 4, when a drag operation on the weather application icon 402 is detected, the weather application icon 402 may be moved along a drag track of the user. The user may place the weather application icon 402 to a target location through the drag operation. The target location is a location at which the user wants to place the weather application icon 402.

For example, as shown in (c) in FIG. 4, a drag direction of the user is an upper right direction, and the weather application icon 402 moves to an upper right corner along a drag track of the user. As shown in (d) in FIG. 4, the target location of the weather application icon 402 is a location at which a sports application icon 404 is located.

When the user drags the weather application icon 402 close to the target location, a speed at which the user drags the application icon may be reduced. When it is detected that the drag speed is less than a critical speed, the smartwatch displays a watch face interface 405. As shown in (e) in FIG. 4, application icons are displayed on the watch face interface 405 in a third size, where the third size is greater than the first size. The watch face interface 405 includes the sports application icon 404.

In some embodiments, when the first application icon stops moving or a movement speed of the first application icon is less than a first speed, a quantity of application icons displayed on the screen is the smallest, and a scaled-up size of the application icon is the largest.

As shown in (e) in FIG. 4, the weather application icon 402 is near the target location. When it is detected that the user releases the weather application icon 402, the smartwatch displays a watch face interface 406. As shown in (f) in FIG. 4, the weather application icon 402 and one or more application icons near the weather application icon 402 are displayed in the third size on the watch face interface 406, where the weather application icon 402 is displayed at the target location.

In some embodiments, a size of the weather application icon 402 is the same before and after the weather application icon 402 is selected. In some other embodiments, after the weather application icon 402 is selected, a size of the weather application icon 402 may be scaled up or down, and is not necessarily the same as a size of another icon on the icon editing interface. The size of the first application icon is not limited in this application.

This is not limited to the solution shown in FIG. 4. In some other embodiments, arrangement of the first application icon may not be changed by dragging, and the intention of the user to move the application icon may be another user operation. For example, after identifying the intention of the user to move the application icon, the smartwatch may change the arrangement of the first application icon by selecting the target location on the icon interface. This is not limited in embodiments of this application.

The first application icon may follow the drag track of the user to reach the target location. It is assumed that a second application icon is arranged at the target location before the first application icon is moved to the target location. In some embodiments, locations of the first application icon and the second application icon may be exchanged when the first application icon is moved to the target location. The second application icon is changed to a start location at which the first application icon is originally located. In some other embodiments, when the first application icon is moved to the target location, the second application icon and a subsequent application icon may be moved backward by one location in sequence.

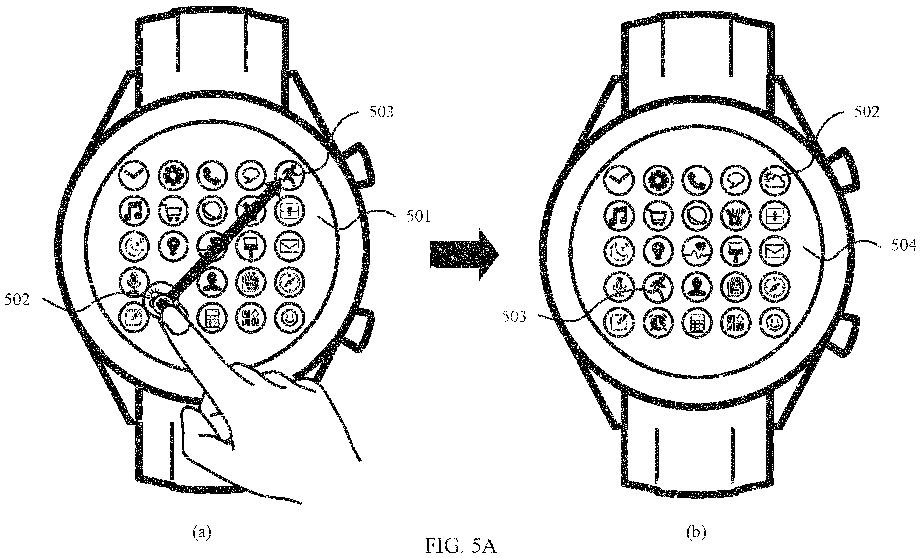

FIG. 5A shows a case in which locations of application icons are exchanged. For example, (a) in FIG. 5A shows a watch face interface 501, a plurality of application icons are displayed on the watch face interface 501, and the plurality of application icons include a weather application icon 502 and a sports application icon 503. The user drags the weather application icon 502 to from an initial location to a target location, where the sports application icon 503 is displayed on the target location. After a location movement operation of the weather application icon 502 is completed, the smartwatch displays a watch face interface 504. As shown in (b) in FIG. 5A, a plurality of application icons are displayed on the watch face interface 504, the weather application icon 502 is displayed at the target location, and the sports application icon 503 is displayed at the initial location. The initial location is a location displayed before the weather application icon 502 starts to move.

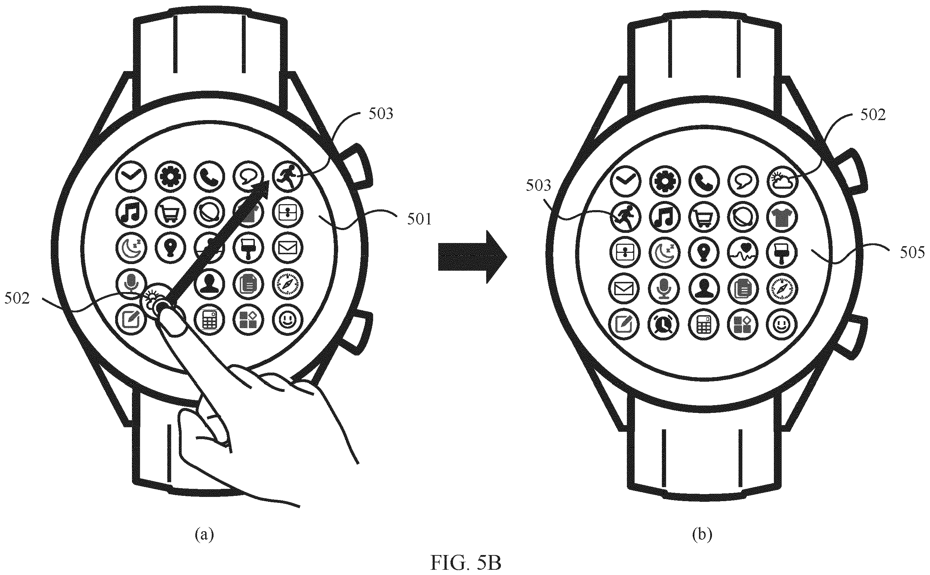

FIG. 5B shows a case in which locations of application icons are sequentially moved backward. For another example, (a) in FIG. 5B shows the watch face interface 501, the plurality of application icons are displayed on the watch face interface 501, and the plurality of application icons include the weather application icon 502 and the sports application icon 503. The user drags the weather application icon 502 to from an initial location to a target location, where the sports application icon 503 is displayed on the target location. After a location movement operation of the weather application icon 502 is completed, for example, the weather application icon 502 is released at the target location, the smartwatch displays a watch face interface 505. As shown in (b) in FIG. 5B, a plurality of application icons are displayed on the watch face interface 505, the weather application icon 502 is displayed at the target location, the sports application icon 503 is displayed at a location next to the target location, and the application icons after the sports application icon 503 are sequentially moved backward by one location.

In some embodiments, the user may drag the first application icon to the second application icon at the target location, so that the first application icon overlaps with the second application icon to some extent, to trigger a change of the location of the application icon.

In some embodiments, the user may not drag the first application icon to overlap with the second application icon in the target location. For example, when the user drags the first application icon to an edge of the target location without release, an arrangement location of the second application icon in the target location may be changed, to vacate the target location for the first application icon. From the perspective of a visual effect, the first application icon squeezes the second application icon into another location. In this way, without releasing the first application icon, the user may view a preview effect in which the first application icon is located at the target location.

In some embodiments, when entering a home screen editing state, the smartwatch does not display all application icons, but displays some application icons on the watch face interface, that is, a scaling-down ratio of the interface is less than a scaling-down ratio in a global state, and the some application icons are displayed on the watch face interface in a second size. The second size is larger than the first size in the global state. In this case, the application icon may also reach the target location based on a drag track of the user.

When not all application icons are displayed on the watch face interface, and when it is detected that the application icon is dragged to an edge of the screen, another icon may be displayed in a scrolling mode on the watch face interface. For example, the weather application icon is dragged. When it is detected that the weather application icon is dragged to an edge on the right side of the screen, the watch face interface is scrolled rightward, and the another icon on the right is displayed. For example, before the watch face interface is scrolled rightward, an application icon on the right edge of the screen is an information application icon, and in the global state, there are a plurality of application icons such as a mailbox application icon on the right side of the mailbox application icon. After the watch face interface is scrolled rightward, the mailbox application icon may be displayed on the watch face interface, or the plurality of application icons on the right side of the mailbox application icon in the global state may be displayed. Similarly, the watch face interface may alternatively be scrolled in another direction and display an application icon in the another direction. Details are not described herein again.

Similarly, when the smartwatch detects that the drag speed is less than the critical speed, the smartwatch displays one or more application icons near the first application icon in a fourth size, where the fourth size is greater than the second size. After it is detected that the user releases the first application icon, the first application icon is displayed at the target location. If the second application icon is originally displayed at the target location, the second application icon may be displayed at an initial location of the first application icon, or may be displayed at a location next to the target location, and subsequent application icons are sequentially moved backward by one location. For details, refer to related descriptions in the embodiments shown in FIG. 5A and FIG. 5B. Details are not described herein again.

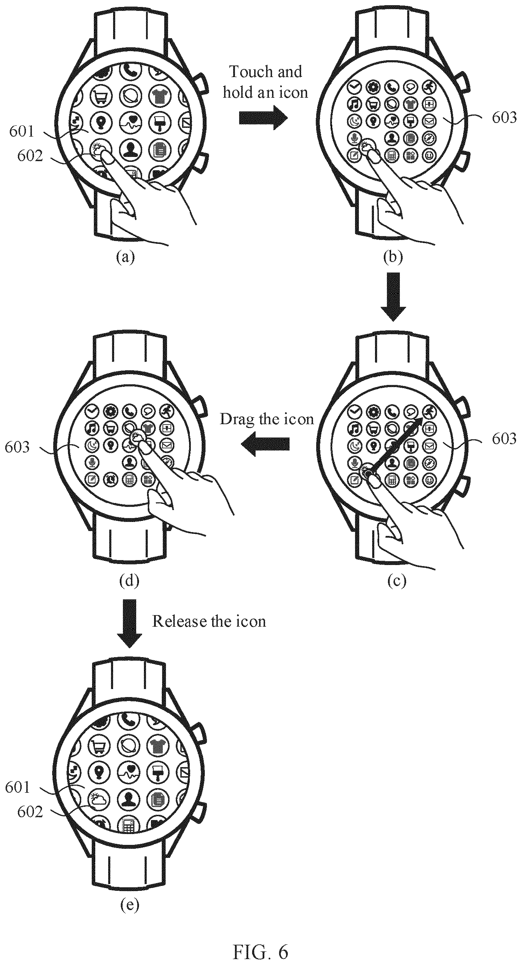

FIG. 6 shows an example of an embodiment in which the smartwatch restores an initial arrangement location of a first application icon after identifying an intention of the user to give up moving the first application icon.

In a process in which the user drags the first application icon to move, when the user does not select a target location in an icon editing state, if the user releases the first application icon, the first application icon returns to an initial location, where the initial location is a location displayed before the first application icon starts to move. The watch face interface may exit from the icon editing state.

For example, (a) in FIG. 6 shows a watch face interface 601. The watch face interface 601 includes a plurality of application icons, and the plurality of application icons may include a complete application icon and an incomplete application icon. The watch face interface 601 includes a weather application icon 602. The smartwatch detects a touch and hold operation performed by the user on the weather application icon 602, and displays a watch face interface 603. As shown in (b) in FIG. 6, the application icons are displayed on the watch face interface 603 in a first size. On the watch face interface 603, the weather application icon 602 may be moved along a drag track of the user. As shown in (c) in FIG. 6, the weather application icon 602 moves up right along a drag track of the user. In a process in which the user drags the weather application icon 602 to move, as shown in (d) in FIG. 6, when it is detected that the user releases the weather application icon 602, and does not select the target location when releasing the weather application icon 602, the weather application icon 602 returns to an initial location. The watch face interface exits from the icon editing state, as shown in (e) in FIG. 6. The watch face interface 601 displayed in (e) in FIG. 6 is the same as the watch face interface 601 displayed in (a) in FIG. 6, where the weather application icon 602 is restored to the initial location. The initial location is a location that is of the watch face interface 601 and that is displayed before the weather application icon 602 starts to move.

In this way, in a process of moving the first application icon, if the user wants to give up moving the first application icon, the user may directly release the first application icon in a drag process, and no other operation is required. The step is simple and easy to operate.

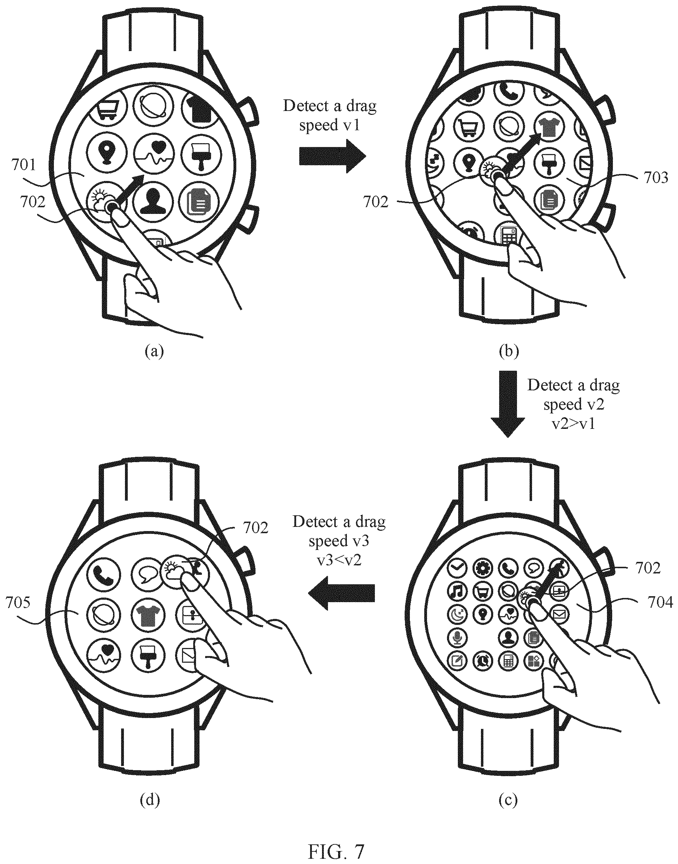

FIG. 7 shows an example of an embodiment in which the smartwatch dynamically changes a display size or a quantity of application icons displayed on the watch face when identifying a change in a drag speed of a first application icon.

In some embodiments, after the smartwatch enters an icon editing state, the display size or the quantity of application icons on the watch face interface of the smartwatch may be dynamically changed. For example, in a process in which the first application icon is moved along a drag track of the user, the smartwatch may determine, based on a drag speed of the user for the first application icon, a display size of the application icons on the watch face interface of the smartwatch. For example, a higher drag speed of the user for the first application icon indicates a smaller display size of the application icons on the watch face interface, and a lower drag speed of the user for the first application icon indicates a larger display size of the application icons on the watch face interface.

In this dynamic change manner, it is considered that when the user drags the application icon at a high speed, the user can quickly drag the application icon to a location near a target location, and when the user drags the application icon at a slow speed, the user can accurately locate a target location.

For example, (a) in FIG. 7 shows a watch face interface 701, the watch face interface 701 includes a plurality of application icons and a weather application icon 702, the plurality of application icons may include a complete application icon and an incomplete application icon, and all the foregoing application icons are displayed on the watch face interface 701 in a ratio 1.

When the smartwatch detects that a drag speed of the user for the weather application icon 702 is a speed v1, the smartwatch displays a watch face interface 703. As shown in (b) in FIG. 7, the watch face interface 703 includes a plurality of application icons, and these application icons are displayed on the watch face interface 703 in a ratio 2. The ratio 2 is less than the ratio 1, that is, a size of the application icon displayed on the watch face interface 703 is less than a size of the application icon displayed on the watch face interface 701.

When the smartwatch detects that a drag speed of the user for the weather application icon 702 is a speed v2, the smartwatch displays a watch face interface 704. As shown in (c) in FIG. 7, the plurality of application icons on the watch face interface 704 are displayed on the watch face interface 704 in a ratio 3. The ratio 3 is less than the ratio 2, and the speed v2 is greater than the speed v1.

When the smartwatch detects that a drag speed of the user for the weather application icon 702 is a speed v3, the smartwatch displays a watch face interface 705. As shown in (d) in FIG. 7, a plurality of application icons on the watch face interface 705 are displayed on the watch face interface 705 in a ratio 4. The ratio 4 is greater than the ratio 3, and the speed v3 is less than the speed v2.

A size of the weather application icon 702 may change with a size change of other application icons on the watch face interface. For example, the weather application icon 702 on the watch face interface 701 may be displayed in the ratio 1, the weather application icon 702 on the watch face interface 703 may be displayed in the ratio 2, the weather application icon 702 on the watch face interface 704 may be displayed in the ratio 3, and the weather application icon 702 on the watch face interface 705 may be displayed in the ratio 5.

In some embodiments, the weather application icon 702 may alternatively be displayed in a fixed size. For example, regardless of a change of other application icons on the watch face interface, the weather application icon 702 has a same size, for example, all of them have the second size, and an application icon of a larger size is convenient for the user to drag.

It should be noted that, during specific implementation, the smartwatch may detect the drag speed of the user for the first application icon at a fixed frequency, and adjust a display ratio of the application icon on the watch face interface in real time based on the drag speed. In some embodiments, the smartwatch may further determine a display ratio of the application icon on the watch face interface based on a drag speed interval in which the drag speed of the user for the first application icon is located, where the drag speed is detected in real time. That is, the display size of the application icon may be segmented, and one display size corresponds to a plurality of movement speeds within one interval.

This is not limited to the technical solution shown in FIG. 7. A relationship between a change in a display size or a quantity of application icons displayed on the screen of the electronic device 100 and the drag speed may be another relationship. This is not limited in this embodiment of this application.

In some embodiments, in a process of moving the first application icon along the drag track of the user, an arrangement layout of each application icon may be dynamically adjusted. In some embodiments, when there is a third application icon on the movement track of the first application icon and the first application icon approaches, the third application icon may be moved to a nearby location for display. That is, from the perspective of a display effect, application icons do not overlap. When moving the first application icon, the user may squeeze another icon into another location on the drag track.

In some embodiments, in a process of moving the first application icon along the drag track of the user, the smartwatch may determine a display size of each application icon based on a distance between each application icon displayed on the watch face interface and the first application icon. For example, the application icons displayed on the watch face interface may be radially displayed with the first application icon as a center. In other words, a longer distance from the first application icon indicates a smaller size of the application icon, and a closer distance from the first application icon indicates a larger size of the application icon.

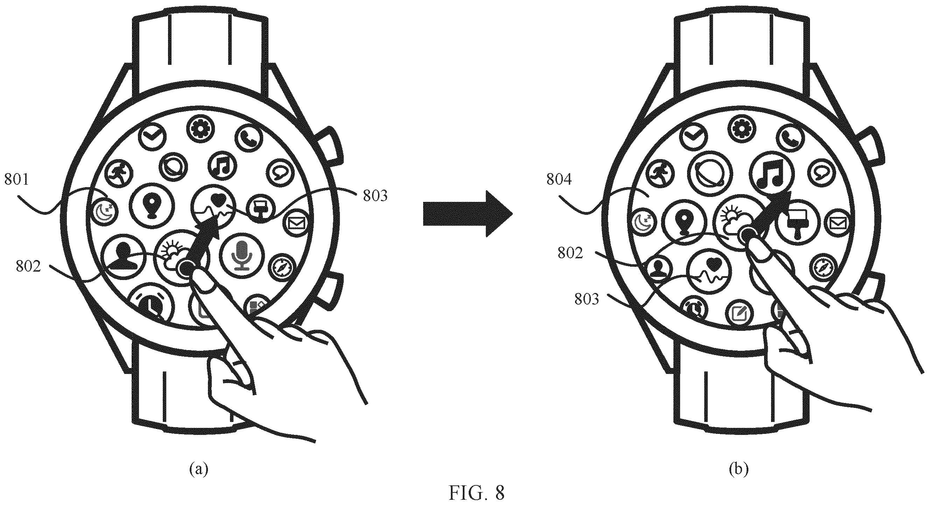

FIG. 8 shows an example of an embodiment in which the smartwatch dynamically changes a display size of each application icon and/or a layout of each application icon on the watch face interface based on a drag track of the first application icon.

For example, FIG. 8 shows a watch face interface 801. The watch face interface 801 is a honeycomb interface displayed after the smartwatch enters an icon editing state. The watch face interface 801 includes a plurality of application icons and a weather application icon 802. The weather application icon 802 is an application icon that is selected by the user and dragged to move. The weather application icon 802 has a largest size and is displayed on the watch face interface 801 in a size 5. The weather application icon 802 is used as a center, and a longer distance from the weather application icon 802 indicates a smaller size of the application icon. For example, one or more application icons displayed in a size 6 such as a map application icon and one or more application icons displayed in a size 7 such as a mailbox application icon may be displayed on the watch face interface 801. The size 5 is greater than the size 6, and the size 6 is greater than the size 7.

The application icons may not overlap. When the user moves the weather application icon 802, another icon may be squeezed into another location on a drag track, that is, the another icon on the drag track gives way to the selected application icon. As shown on the watch face interface 801 in (a) in FIG. 8, the weather application icon 802 is in a lower left corner of a health application icon 803. When the user drags the weather application icon 802 through a location of the health application icon 803, as shown on a watch face interface 804 in (b) in FIG. 8, locations of the weather application icon 802 and the health application icon 803 may be exchanged, and the weather application icon 802 is displayed in an upper right corner of the health application icon 803.

An arrangement layout change of the watch face interface in FIG. 8 is merely an example. An arrangement layout of application icons displayed on the watch face interface in a process of moving the first application icon is not limited in this embodiment of this application.

In some embodiments, the user may also be supported in moving a plurality of application icons simultaneously. FIG. 9 shows an embodiment in which the user moves the plurality of application icons.

For example, as shown in (a) in FIG. 9, the smartwatch displays a watch face interface 901, and the watch face interface 901 includes a plurality of application icons and a weather application icon 902. The smartwatch detects a touch and hold operation performed by the user on the application icon or the screen, and displays a watch face interface 904. As shown in (b) in FIG. 9, the watch face interface 904 includes a plurality of application icons such as the weather application icon 902 and a music application icon 903.

All application icons may be displayed on the watch face interface 904. The user may select the plurality of application icons on the watch face interface 904. The application icon selected by the user may be highlighted. Alternatively, a selected identifier, for example, a check mark or another identifier, that can be used to distinguish the application icon selected by the user from another application icon may be displayed on the application icon. This is not limited in this application.

For example, as shown in (b) in FIG. 9, the user selects the weather application icon 902, and the weather application icon 902 is highlighted. When the user further needs to select the music application icon 903, the user may drag the weather application icon 902 to a location of the music application icon 903, as shown on a watch face interface 905 in (c) in FIG. 9. After the user drags the weather application icon 902 to the location of the music application icon 903 for a time period 1 (for example, 1 second), the music application icon 903 is also highlighted, and changes to a selected state.

(d) in FIG. 9 is a schematic diagram in which the weather application icon 902 and the music application icon 903 are moved together with a drag track of the user. As shown in (d) in FIG. 9, when both the weather application icon 902 and the music application icon 903 are selected by the user, the selected application icons may be attached together to move along the drag track of the user, and an attachment sequence of the application icons may be arranged according to a sequence in which the application icons are selected by the user. For example, an application icon that is first selected is displayed at the top layer, and an application icon that is last selected is displayed at the bottom layer. In (d) in FIG. 9, the user first selects the weather application icon 902 and then selects the music application icon 903, so that the music application icon 903 is attached under the weather application icon 902.

When a drag speed of the user is less than a critical speed, the smartwatch scales up the application icon for display, that is, display a watch face interface 906. The user may select a target location on the watch face interface 906 to place the application icon dragged by the user.

For example, as shown in (e) in FIG. 9, a plurality of application icons such as a phone application icon 907 and an application icon dragged by the user are displayed on the watch face interface 906. The application icon dragged by the user includes the weather application icon 902 and the music application icon 903. The phone application icon 907 is a location previous to the target location, and the target location is a location where the application icon dragged by the user is to be placed.

It is assumed that after the user needs to drag a plurality of selected icons to a location of the phone application icon 907, a user operation of releasing the selected application icon by the user is detected. The smartwatch displays a watch face interface 908. As shown in (f) in FIG. 9, a plurality of application icons whose arrangement layout is changed are displayed on the watch face interface 908. The weather application icon 902 and the music application icon 903 are sequentially displayed in locations next to the phone application icon 907, that is, the weather application icon 902 and the music application icon 903 are inserted and displayed in the locations next to the phone application icon.

In some embodiments, when detecting that the user releases the selected one or more application icons, the smartwatch may alternatively create a folder in the target location, where the folder is used to place the one or more application icons selected by the user.

In some embodiments, the selected identifier may also indicate a selected state of a plurality of selected icons. For example, after the smartwatch detects that the user selects an application icon 1, the watch face interface is in an icon editing state, and the icon editing state may be represented as that each application icon is in a jitter state. A small selection box is displayed in an upper right corner of each icon, and is used by the user to select a plurality of application icons that need to be moved. If an icon is selected by tapping, a selected identifier, for example, a check mark, may be displayed in a small selection box in the upper right corner of the icon. If an icon is not selected, a small selection box in the upper right corner of the icon may be blank. If the user further needs to select an application icon 2, the user may also tap a small selection box in an upper right corner of the application icon 2, to change the blank small selection box into the small selection box with a selected identifier.

For example, after it is detected that the user selects the weather application icon, the watch face interface is in the icon editing state, and a check mark is displayed on the weather application icon. The smartwatch detects a selection operation performed by the user on the music application icon, for example, a tap or touch and hold, a check mark is also displayed on the music application icon, indicating that the music application icon is also selected at this time. Similarly, another application icon can also be selected.

After the user selects the plurality of application icons, the user may hold down and drag one icon, and another selected application icon may be accordingly moved. In response to a drag operation of the user, all application icons selected by the user are moved along a movement track of a finger of the user.

The foregoing embodiment in which the plurality of application icons are moved simultaneously constitutes no limitation on other embodiments, and there may be a plurality of manners of selecting the plurality of application icons.

In some other embodiments, when it is detected that the application icon selected by the user is a type of application icon, the smartwatch may display a prompt box, and the prompt box is used to ask the user whether to select an application icon of a same type.

For example, when the application icon selected by the user is a chat application icon, the smartwatch may display a prompt box, and a prompt text, a confirmation control, and/or a cancellation control are displayed in the prompt box. The prompt text content may be "Are you sure you want to select all social applications at the same time". The confirmation control may be configured to trigger the user to confirm selection of all social application icons. The cancellation control may be configured to trigger the user to cancel selection of another application icon of a same type.

The foregoing embodiments in FIG. 2A to FIG. 9 and a combination thereof are implemented, so that when the user selects or moves the first application icon, a plurality of scaled-down application icons or all scaled-down application icons are displayed on the watch face interface, that is, more application icons are displayed than those previously displayed on the interface. This facilitates the user to find the target location more easily in a process of moving the application icon, thereby reducing time for moving the application icon.

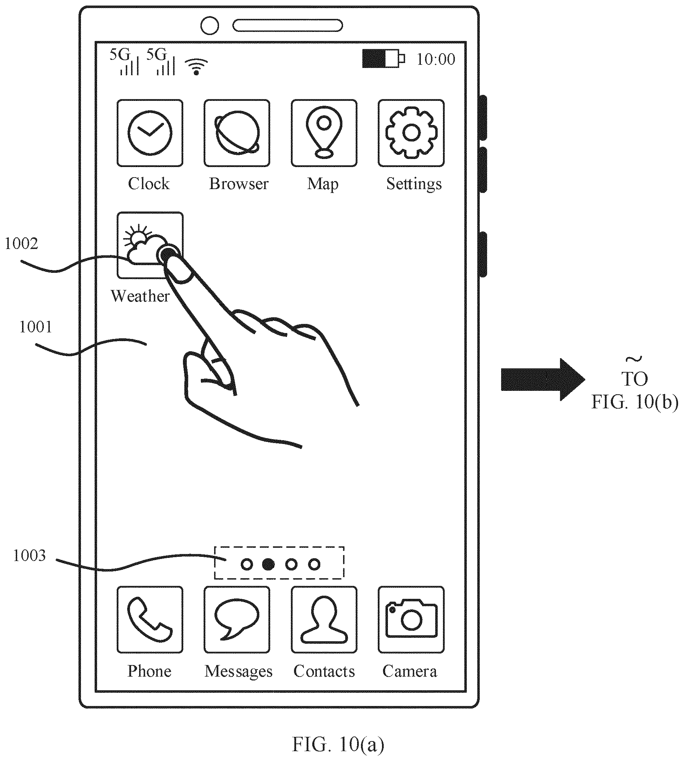

The icon moving method provided in this application may be further applied to another electronic device that has a display, for example, a mobile phone. FIG. 10(a) to FIG. 14(f) describe, by using the mobile phone as an example device, related graphical interfaces provided in embodiments of this application.

FIG. 10(a) to FIG. 10(d) show a schematic process of moving an application icon on the mobile phone.

As shown FIG. 10(a) shows a page 1001 on a home screen of a mobile phone. The page 1001 includes one or more application icons such as a clock application icon, a browser application icon, a map application icon, a setting application icon, and a weather application icon 1002.

For example, a plurality of pages may be included on the home screen of the mobile phone, and the plurality of application icons may be distributed on the plurality of pages. A page indicator 1003 may be further displayed on the page 1001 to indicate a total quantity of pages on the home screen and a location relationship between a currently displayed page and another page.

For example, four pages may be included on the home screen of the mobile phone, and a black dot in the page indicator 1003 on the page 1001 is at a second location from left, which may indicate that the currently displayed page 1001 is a second page from left of the four pages on the home screen. Optionally, a top status bar is further displayed on the top of the home screen of the mobile phone, and the top status bar may include information about a communication signal, for example, a strength indicator, a power level value, and time. Further, optionally, there may be a dock (dock) area below the page indicator, and one or more dock icons such as a phone application icon, an information application icon, an address book application icon, and a camera application icon may be included in the dock area. The one or more dock icons in the dock area may be always displayed during page switching.

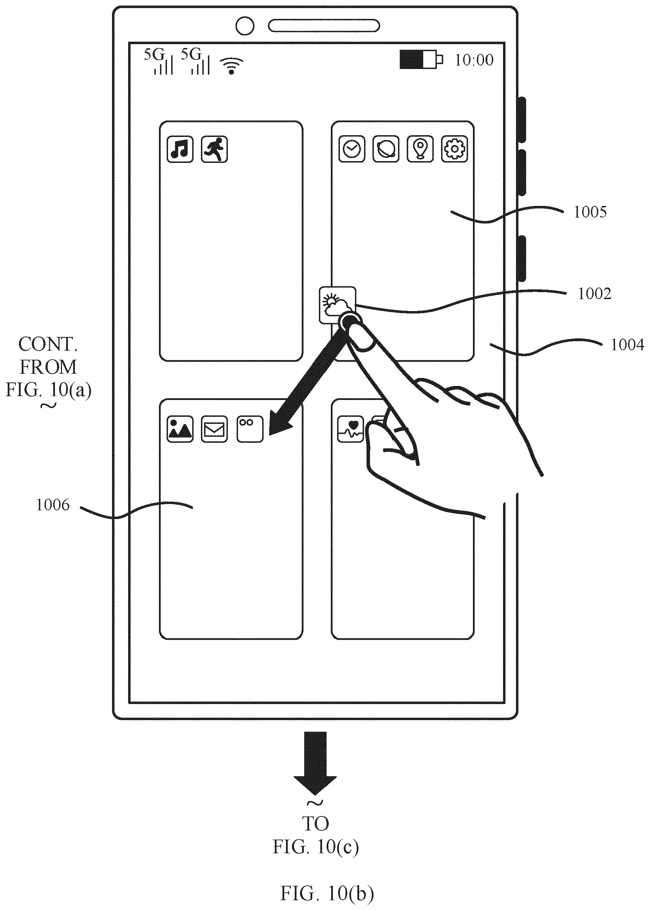

If a touch and hold operation performed by the user on a first application icon or a blank area on an interface is detected, the mobile phone may display a plurality of scaled-down pages. For example, when a touch and hold operation performed by the user on the weather application icon 1002 is detected, the mobile phone displays an interface 1004. As shown in FIG. 10(b), all scaled-down pages are displayed on the interface 1004. For example, the interface 1001 may include four pages, and the four scaled-down pages, for example, a page 1, a page 2 1005, a page 3 1006, and a page 4 are displayed on the interface 1004. One or more application icons are arranged on each page. Optionally, folder icons may be further placed on some pages, and the folder icon may be used to store the one or more application icons.

It should be noted that, in some embodiments, when the user selects an application icon, an interface of a plurality of pages, for example, the interface 1004 shown in FIG. 10(b), may be triggered for display. In some other embodiments, an interface of a plurality of pages, for example, the interface 1004 shown in FIG. 10(b), is triggered for display, only when the user selects an application icon, drags the application icon to an edge of a screen, and continues to move the application icon outward. In the operation manner, it is considered that the user moves an icon on a same page without a redundant operation. If it is detected that the user drags the application icon out of a page on which the application icon is located, it indicates that the user has a demand of moving the application icon to another page. Especially when a target page and the another page are not adjacent, the interface 1004 is displayed, so that the user can quickly select the target page, to reduce a user operation.

When it is detected that the user drags the first application icon to one of the scaled-down pages, and the page is selected, the mobile phone exits from a selection interface of a plurality of pages, namely, the interface 1004, and then displays a scaled-up page of the selected page.

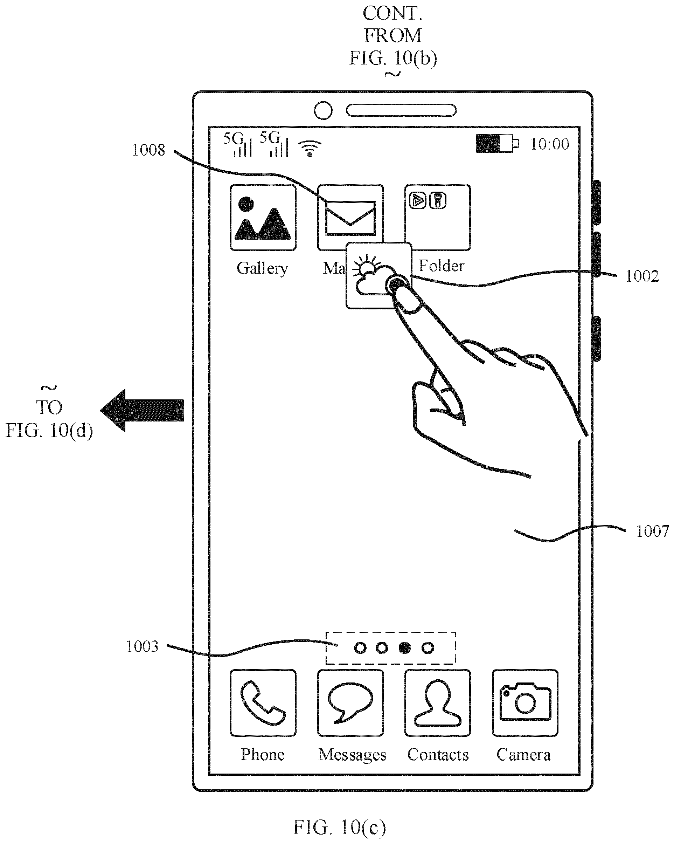

For example, as shown in FIG. 10(b), it is detected that the user drags the weather application icon 1002 to the page 3 1006, and the mobile phone may display a scaled-up interface of the page 3. As shown in FIG. 10(c), the mobile phone displays a page 1007. A plurality of application icons such as a gallery application icon and a mailbox application icon 1008 are displayed on the page 1007. The page 1007 may further include the folder icon.

The page indicator 1003 may be further displayed below the page 1007. The black dot in the page indicator 1003 on the page 1007 is at a third location from left, which may indicate that the currently displayed page 1007 is a third page from left of the four pages on the home screen.

The user may drag the weather application icon 1002 on the page 1007 to select a target location on the page 1007. The target location is a location at which the user wants to place the weather application icon 1002. It is assumed that the target location of the mobile weather application icon 1002 is on the page 1007, for example, a location next to the mailbox application icon.

As shown in FIG. 10(c), on the page 1007, the user drags the weather application icon 1002 to the location next to the mailbox application icon 1008. The mobile phone detects that the user releases the weather application icon 1002, and may display a page 1009. The location next to the mailbox application icon 1008 is the target location.

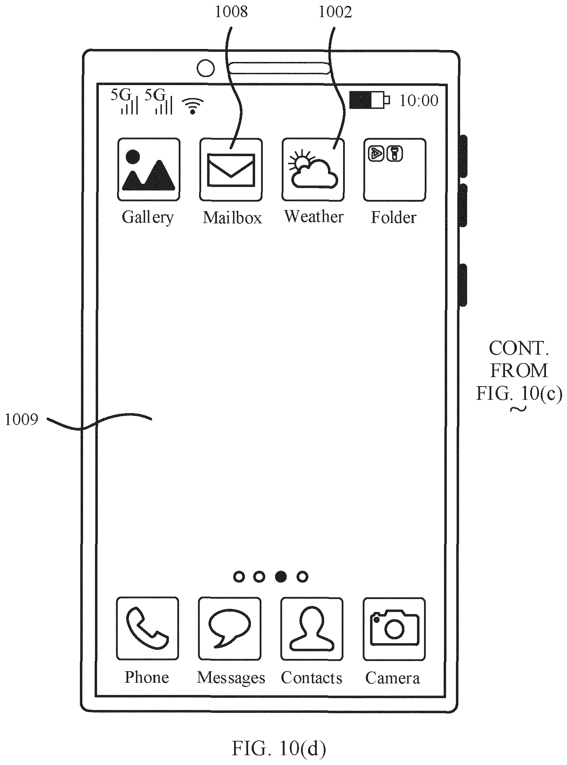

As shown in FIG. 10(d), the page 1009 is a page obtained through a rearrangement layout after the weather application icon 1002 is moved. On the page 1009, the weather application icon 1002 is arranged at the target location, that is, the weather application icon 1002 is displayed at the location next to the mailbox application icon 1008, and all application icons that are originally located after the mailbox application icon 1008 are sequentially moved backward by one location.

It should be noted that, in some embodiments, when the user drags the first application icon to overlap a second application icon in the target location, the first application icon and the second application icon may be triggered to form a new folder, and the new folder icon may be displayed at the target location.

In some embodiments, when there is a folder icon at the target location selected by the user, the mobile phone may place the first application icon in the folder in response to an operation of releasing the first application icon by the user.

In some embodiments, when moving the first application icon, the user does not select the target location of the first application icon on the page. In this case, when detecting that the user releases the first application icon, the mobile phone may display the first application icon at a last location on the page. The last location is a location next to a location of a last application icon displayed on the page.

When there is no sufficient space on the page selected by the user, that is, when there are application icons at all locations on the page selected by the user, and there is not any location for another application icon, the mobile phone exits from a page selection interface, and the first application icon returns to an initial location of the first application icon. The initial location is a location at which the first application icon is located before being moved by the user.

When the mobile phone displays the page selection interface, namely, the interface 1004, and the user does not select any page, if the operation of releasing the first application icon by the user is detected, the mobile phone exits from the page selection interface, and the first application icon returns to the initial location of the first application icon.

In some embodiments, when entering the page selection interface, the mobile phone may not display all scaled-down pages on the interface, but display an interface whose scaling-down ratio is a second ratio. It is assumed that a scaling-down ratio of an interface on which all pages are displayed is a first ratio. In this case, the first ratio is greater than the second ratio. It is assumed that a page on an interface on which some pages are scaled down has a size B, and a page on an interface on which all pages are scaled down has a size A. In this case, the size B is greater than the size A.

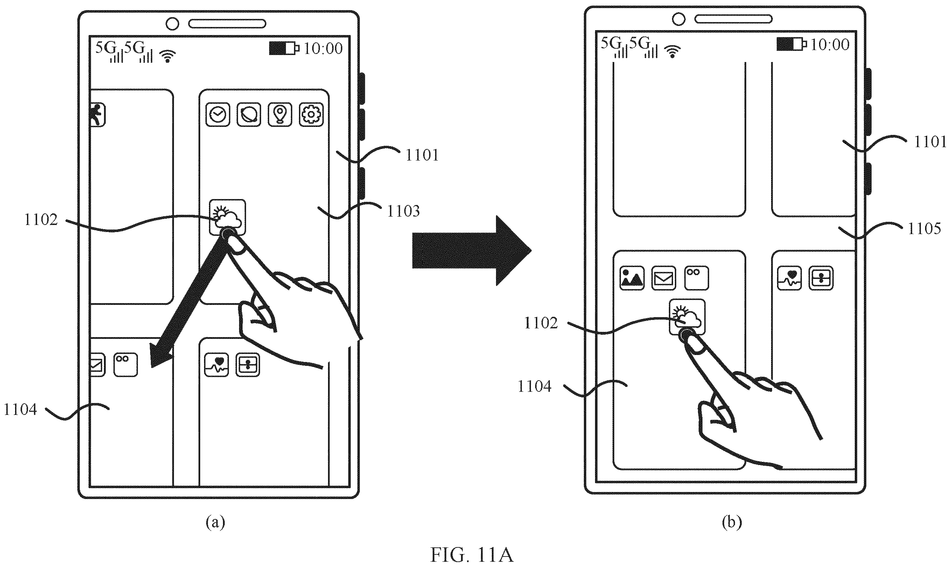

For example, (a) in FIG. 11A shows another page selection interface 1101, and one complete scaled-down page (a page 2 1103), three incomplete scaled-down pages (a page 1, a page 3 1104, and a page 4), and a weather application icon 1102 selected by the user are displayed on the page selection interface 1101.

When it is detected that the user drags a first application icon toward an edge of a screen, more page parts are displayed in a scrolling mode on the page selection interface. For example, as shown in (a) in FIG. 11A, when it is detected that the user drags the weather application icon 1102 to the page 3 1104 displayed at a lower left corner of the interface 1101, the page selection interface may be scrolled leftward down, and an interface 1105 is displayed. As shown in (b) in FIG. 11A, one complete scaled-down page (the page 3 1104), three incomplete scaled-down pages (the page 1, the page 2, and the page 4), and the weather application icon 1102 are displayed on the interface 1105.

The page 3 1104 may be a target page to which the user moves the weather application icon 1102. As shown in (b) in FIG. 11A, the user moves the weather application icon 1102 from the page 2 1103 to the page 3 1104.

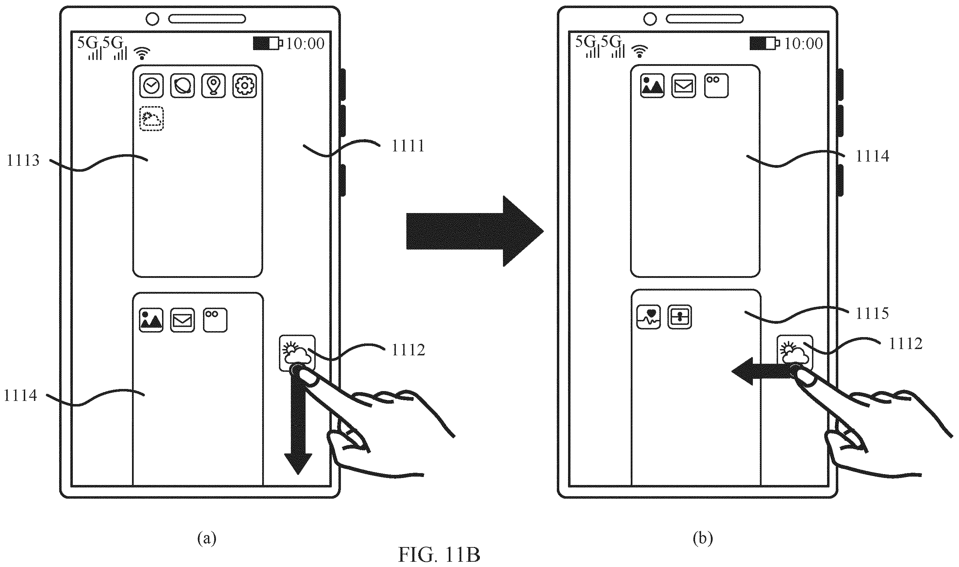

In this embodiment of this application, a plurality of scaled-down pages on the page selection interface may be arranged in a row-column alignment manner shown in FIG. 11A, or may be arranged in a vertical column manner shown in FIG. 11B. An arrangement manner of the plurality of scaled-down pages on the page selection interface is not limited in embodiments of this application, and a quantity of scaled-down pages displayed on the page selection interface and a display ratio of the pages are not limited.

For example, (a) in FIG. 11B shows another page selection interface in a vertical column arrangement form. For details, refer to an interface 1111. One complete scaled-down page (a page 1 1113), one incomplete scaled-down page (a page 2 1114), and a moving weather application icon 1112 are displayed on the interface 1111. When it is detected that the user drags the weather application icon 1112 downward, the page selection interface may be scrolled down to display more page content, that is, the mobile phone displays an interface 1116. One complete scaled-down page (the page 2 1114) and one incomplete scaled-down page (a page 3 1115) are displayed on the interface 1116. The user may drag the weather application icon 1112 from a blank area outside a page area on the interface 1111 to the scaled-down page 3 1115. Then, the mobile phone may display the scaled-up page 3 1115, and the user may move the selected weather application icon 1112 on the page 3 1115, so that the user can select a target location on the page 3 1115.

It should be noted that a scaling-down ratio of the page selection interface may be limited. For example, a scaling-down ratio of the page selection interface on which all pages are exactly displayed and there is no redundant blank area is a scaling-down ratio A, and a scaling-down ratio of the page selection interface on which one page is completely displayed is a scaling-down ratio B. In this case, a scaling-down ratio of the page selection interface in another case may be between the scaling-down ratio A and the scaling-down ratio B.

It should be noted that, in some embodiments, a size of the first application icon is the same before and after the first application icon is selected. In some other embodiments, after the first application icon is selected, a size of the first application icon may be scaled up or down, and is not necessarily the same as a size of another icon on the page selection interface. The size of the first application icon is not limited in this application.

In some embodiments, the selected first application icon may alternatively be displayed in a fixed size. For example, regardless of a change of other application icons on the watch face interface, the selected first application icon has a same size, and an application icon of a larger size is convenient for the user to drag.

It should be noted that, during specific implementation, the mobile phone may detect a drag speed of the user for the first application icon at a fixed frequency, and adjust a display ratio of the plurality of pages on the page selection interface in real time based on the drag speed. In some embodiments, the mobile phone may further determine the display ratio of the plurality of pages on the page selection interface based on a drag speed interval in which the drag speed of the user for the first application icon is located, where the drag speed is detected in real time. That is, the display size of the scaled-down page may be segmented, and one display size corresponds to a plurality of movement speeds within one interval.

In some embodiments provided in this application, after the mobile phone enters the page selection interface, the scaling-down ratio of the interface or the display size of the page on the interface may change dynamically.

For example, in a process in which the user drags the first application icon to select a page, the mobile phone may determine the display size of the page on the page selection interface of the mobile phone or the scaling-down ratio of the interface of the mobile phone based on a drag speed at which the user drags the first application icon.

For example, similarly to the embodiment shown in FIG. 7, a higher speed at which the user drags the first application icon indicates a smaller display size of each page on the page selection interface, a larger scaling-down ratio of the page selection interface, and a smaller size of the application icon on the page selection interface; and a lower speed at which the user drags the first application icon indicates a larger display size of the page on the page selection interface, a smaller scaling-down ratio of the page selection interface, and a larger size of the application icon on the page selection interface.

In this dynamic change manner, it is considered that when the user drags the application icon at a high speed, the user can quickly drag the application icon to a location near the target location, and when the user drags the application icon at a slow speed, the user can accurately locate the target location.

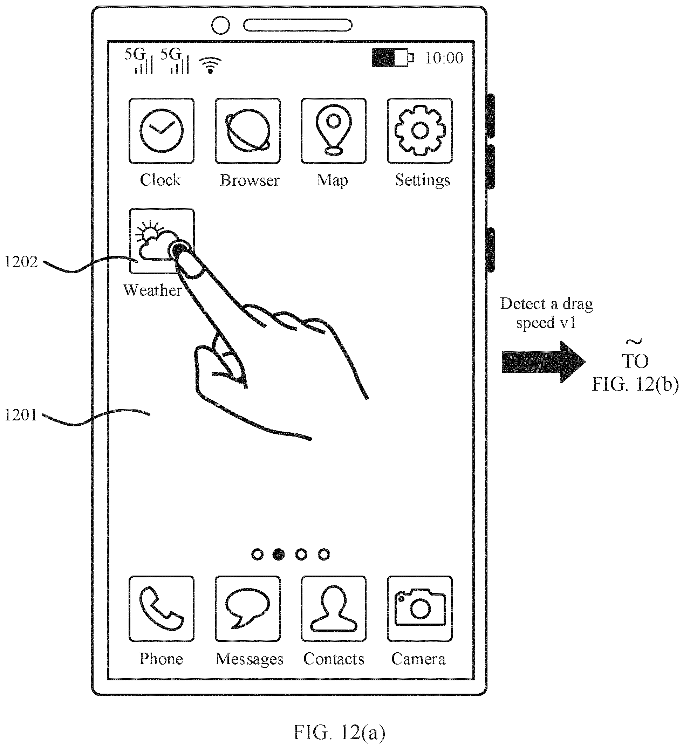

FIG. 12(a) to FIG. 12(f) show an example of an embodiment in which the mobile phone dynamically changes a display size or a quantity of pages displayed on a screen according to a change of a drag speed of a first application icon.

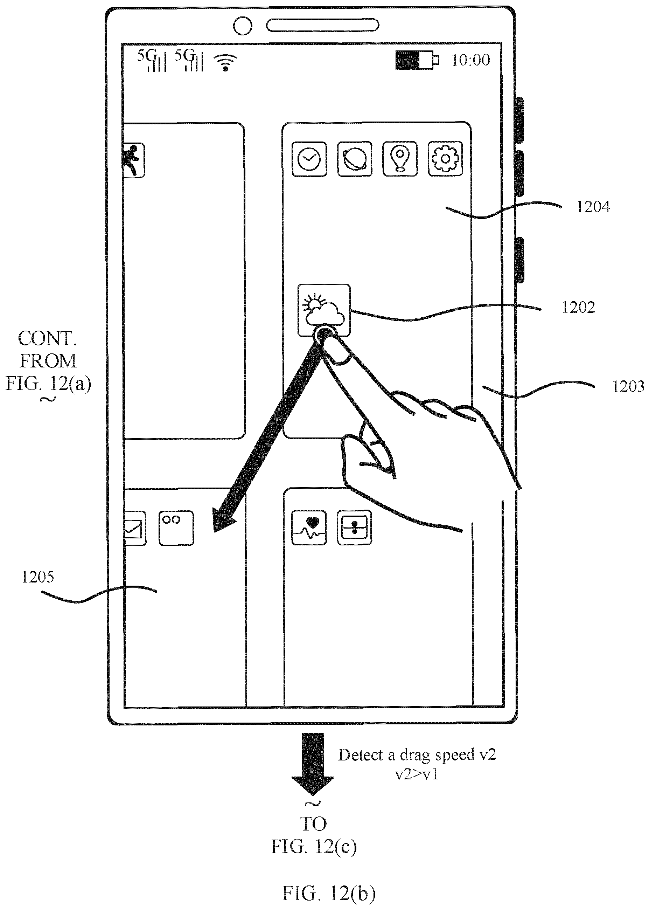

For example, FIG. 12(a) shows a page 2 of a home screen, namely, an interface 1201. For specific description of the interface 1201, refer to related content in the embodiment shown in FIG. 10(a). The mobile phone displays a page selection interface in response to a touch and hold operation performed by the user on the weather application icon 1202. As shown in FIG. 12(b), when the mobile phone detects that a drag speed of the user for the weather application icon 1202 is a speed v1, the mobile phone may display an interface 1203, and at least one scaled-down page, for example, a scaled-down page 1, a scaled-down page 2 1204, a scaled-down page 3 1205, and a scaled-down page 4, is displayed on the interface 1203 in a scaling-down ratio 1.

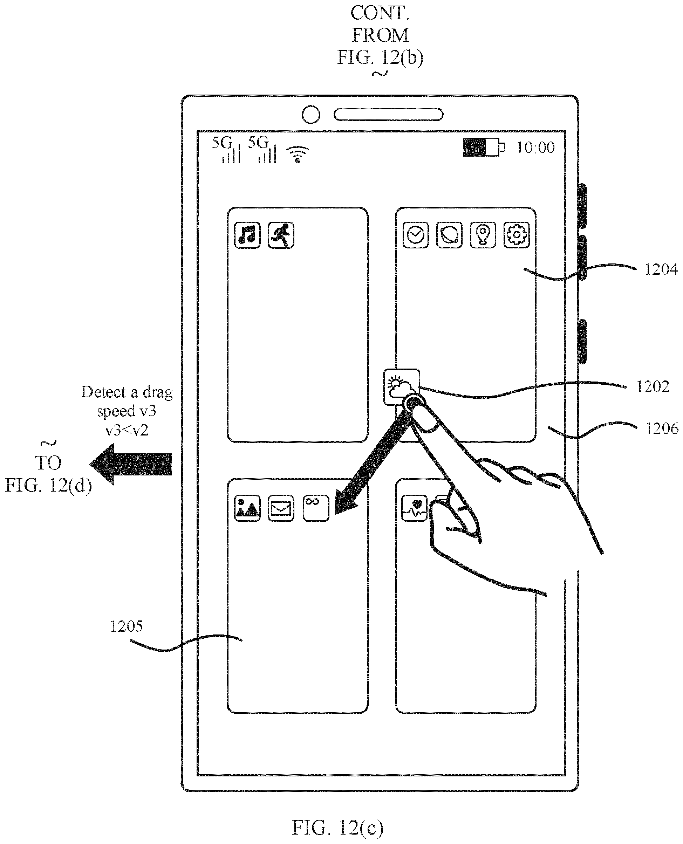

When the mobile phone detects that a drag speed of the user for the weather application icon 1202 is a speed v2, the mobile phone may display an interface 1206. As shown in FIG. 12(c), all scaled-down pages, for example, the page 1, the page 2 1204, the page 3 1205, and the page 4, are displayed on the interface 1206 in a scaling-down ratio 2. The speed v2 is greater than the speed v1, and the scaling-down ratio 1 is less than the scaling-down ratio 2. In other words, a size of each scaled-down page on the interface 1206 is less than a size of each scaled-down page on the interface 1203.

As shown in FIG. 12(c), the user may drag the weather application icon 1202 from a location of the page 2 1204 to a location of the page 3 1205.

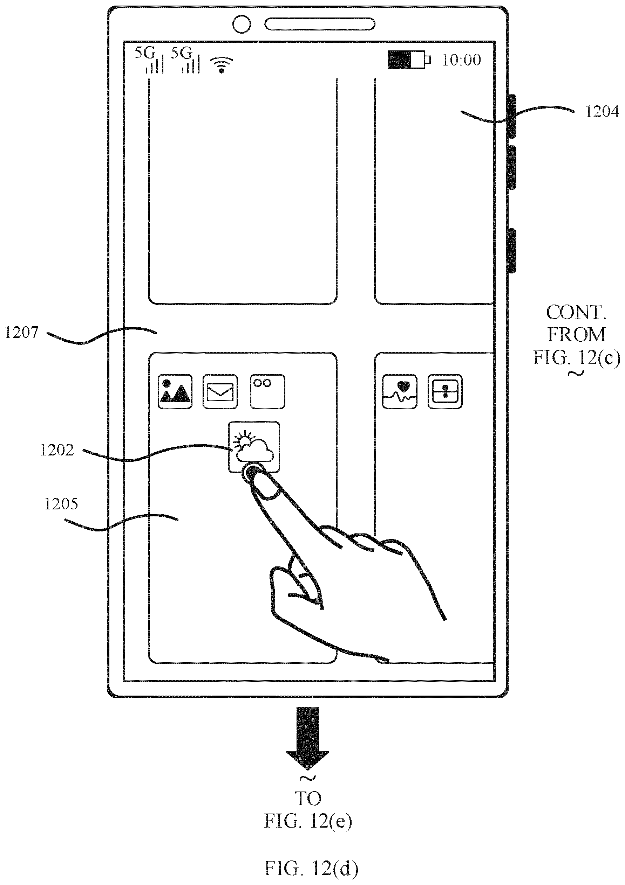

When the mobile phone detects that a drag speed of the user for the weather application icon 1202 is a speed v3, the mobile phone may display an interface 1207. As shown in FIG. 12(d), at least one scaled-down page, for example, the page 1, the page 2 1204, the page 3 1205, and the page 4, is displayed on the interface 1207 in a scaling-down ratio 3. The speed v3 is less than the speed v2, and the scaling-down ratio 3 is less than the scaling-down ratio 2. In other words, a size of each scaled-down page on the interface 1207 is greater than a size of each scaled-down page on the interface 1206.

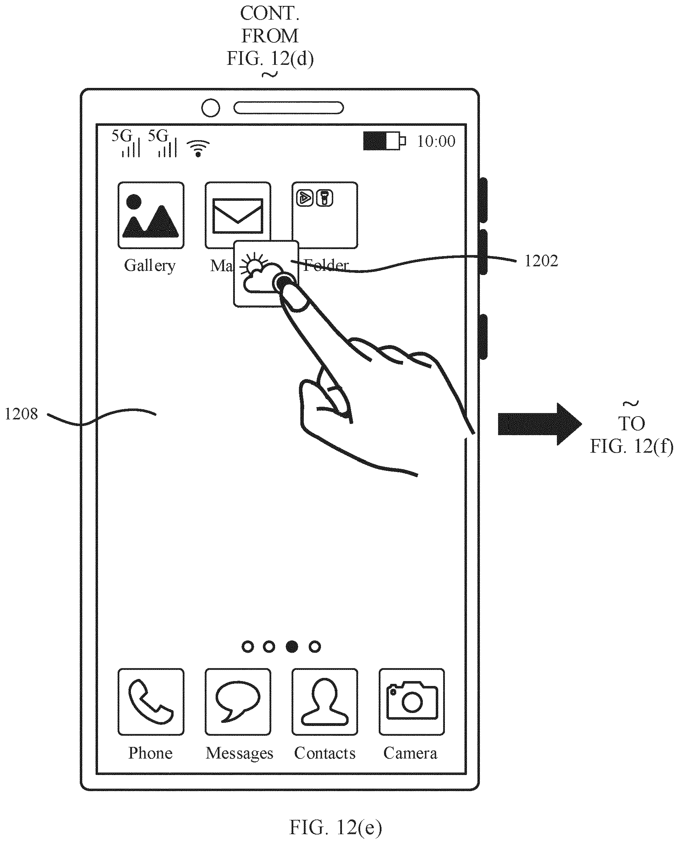

When it is detected that the user selects the scaled-down page 3 1205, the mobile phone displays the scaled-up page 3, namely, an interface 1208. As shown in FIG. 12(e), the user may select a target location of the weather application icon 1202 on the interface 1208. For example, the user selects a location next to a mailbox application icon as the target location.

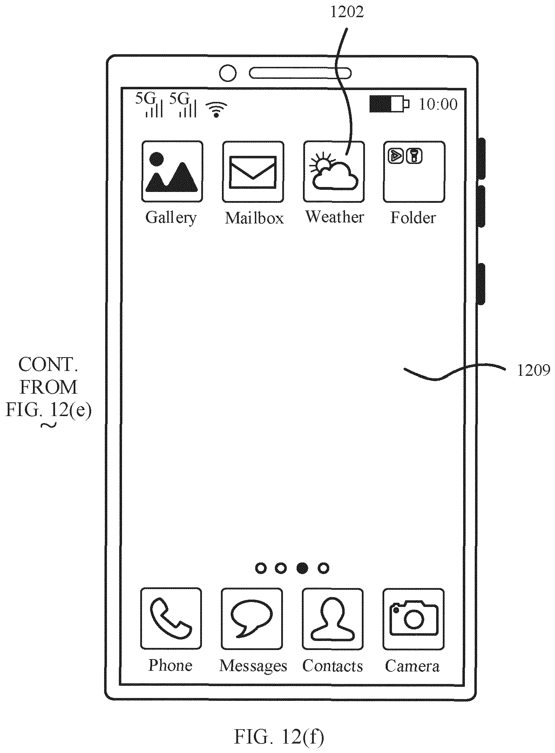

On the interface 1208, when detecting an operation that the user releases the weather application icon 1202 at the target location, the mobile phone may display an interface 1209, as shown in FIG. 12(f). A plurality of rearranged application icons may be displayed on the interface 1209. As shown on the interface 1209, the weather application icon 1202 is placed at the location next to the mailbox application icon, and a folder icon at the original target location is moved backward by one location.

This is not limited to the technical solution shown in FIG. 12(a) to FIG. 12(f). A relationship between a change in a display size or a quantity of application icons displayed on the screen of the electronic device 100 and the drag speed may be another relationship. This is not limited in this embodiment of this application.

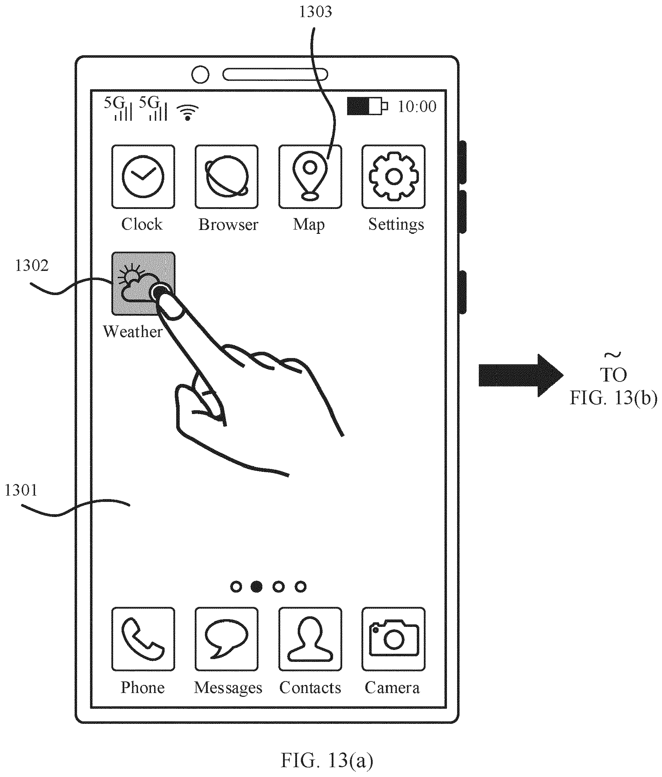

FIG. 13(a) to FIG. 14(f) show an example of an embodiment in which the user moves a plurality of application icons simultaneously.

In some embodiments, the user may also be supported in moving the plurality of application icons simultaneously. These application icons may be on a same page or may be on different pages.

For example, as shown in FIG. 13(a), the mobile phone displays an interface 1301, and a weather application icon 1302 is displayed on the interface 1301. In some embodiments, when the mobile phone detects a touch and hold operation on the weather application icon 1302, namely, an operation of selecting the weather application icon 1302, the weather application icon 1302 may be highlighted, indicating that the weather application icon 1302 is in a selected state. In some other embodiments, a selected identifier, for example, a check mark, that can be used to distinguish the weather application icon from another application icon may be displayed on the weather application icon, to indicate the selected state. This is not limited in this application.

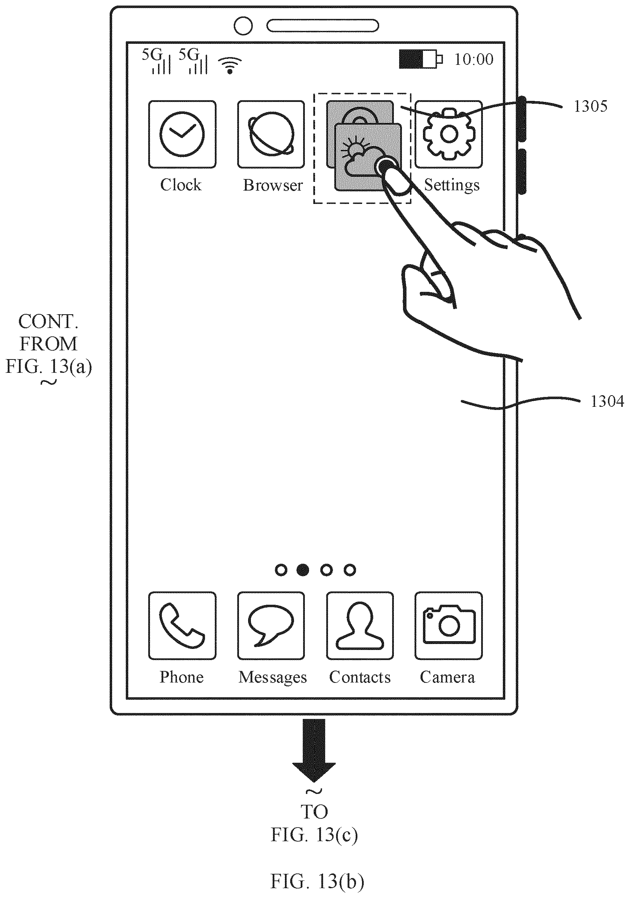

After the user selects the weather application icon 1302, when the user further needs to select the another application icon, for example, a map application icon 1303, the user may drag the weather application icon 1302 to a location of the map application icon 1303. As shown in FIG. 13(b), the mobile phone displays an interface 1304. On the interface 1304, the user drags the weather application icon 1302 to the location of the map application icon 1303 and stays for a time period 1 (for example, 1 second). Then, the map application icon is highlighted and changes to the selected state. In addition, the map application icon 1303 and the weather application icon 1305 are attached together to form a selected icon set 1305. In the selected icon set 1305, application icons may be attached together in a sequence in which the application icons are selected by the user. For example, an application icon that is first selected is displayed at the top layer, and an icon that is last selected application is displayed at the bottom layer. Here, the weather application icon 1302 is located at the top layer, and the map application icon 1303 is located at the bottom layer.

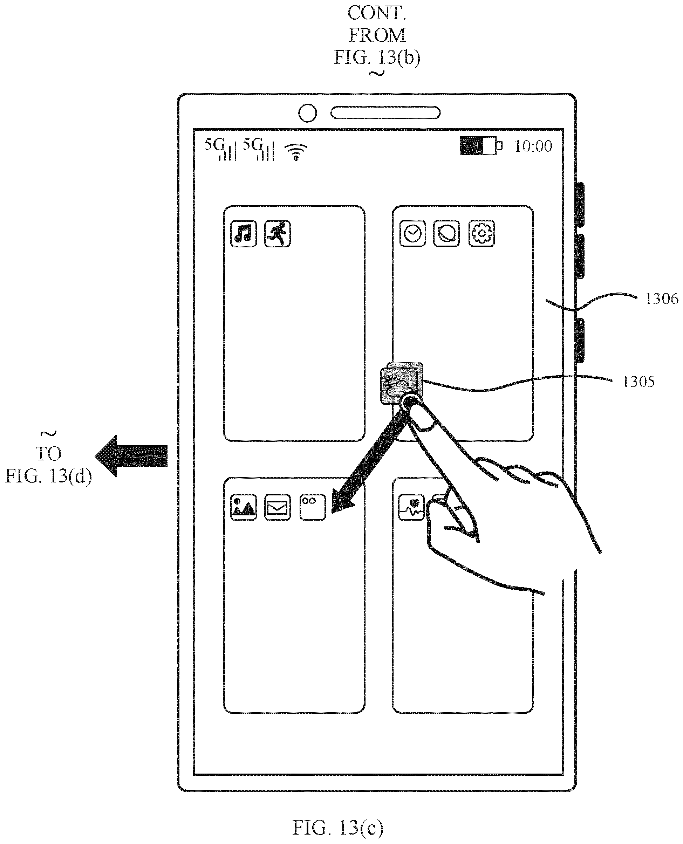

After the user selects the plurality of application icons, the user may drag the selected icon set 1305. As shown in FIG. 13(c), the mobile phone displays an interface 1306. The interface 1306 is a page selection interface. For specific descriptions of the interface, refer to related content in the foregoing embodiment. Details are not described herein again. On the interface 1306, the selected icon set 1305 may be moved along a drag track of the user.

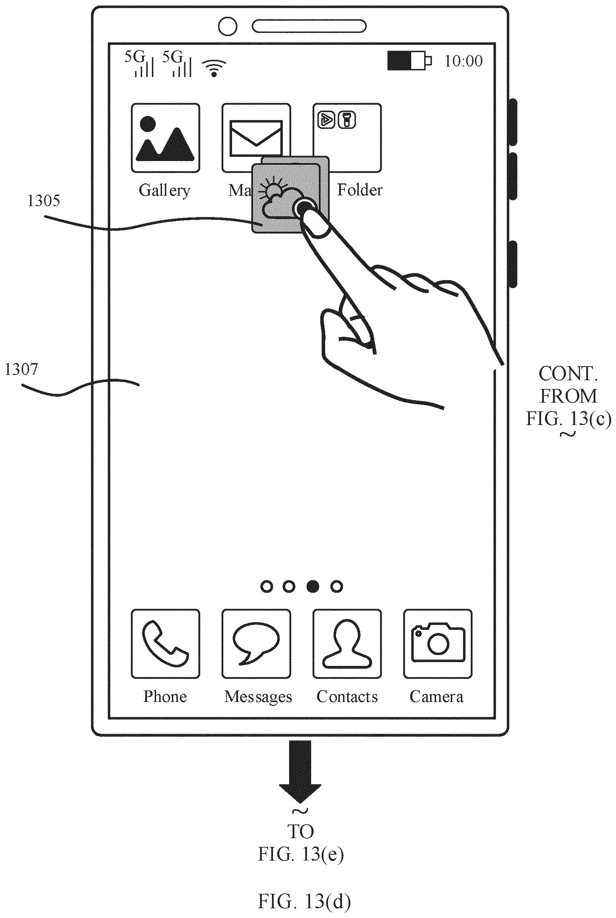

On the interface 1306, the user selects one page, for example, a page 3, and then the mobile phone may scale up the selected page 3 for display, namely, an interface 1307. As shown in FIG. 13(d), a plurality of application icons and the selected icon set 1305 in a drag state are displayed on the interface 1307.

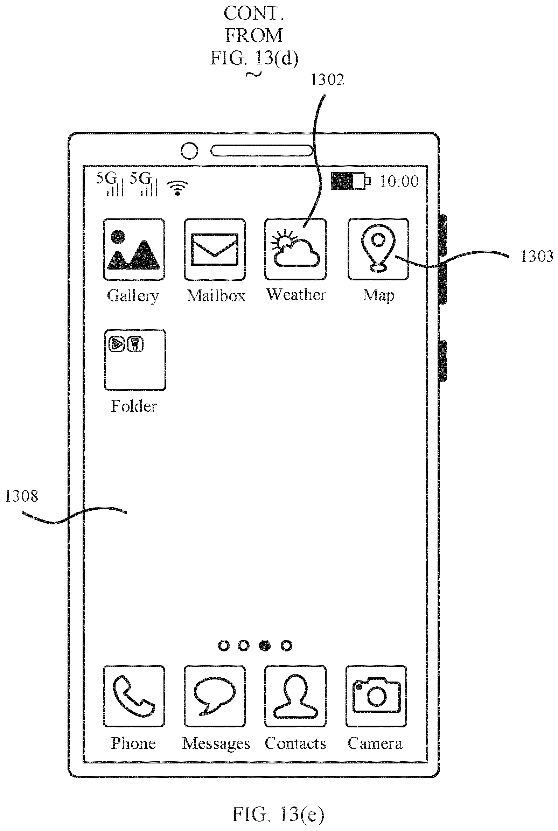

On the interface 1307, after detecting that the user releases the selected icon set 1305, the mobile phone displays an interface 1308. As shown in FIG. 13(e), on the interface 1308, the weather application icon 1302 and the map application icon 1303 are sequentially arranged at a target location and a location next to the target location according to a selection sequence, and application icons originally at the target location and the location next to the target location are sequentially moved backward.

In some other embodiments, after the user drags the selected icon set 1305 to a target location and releases a finger, the mobile phone may generate a folder at the target location selected by the user. All application icons in the selected icon set 1305 are placed in the folder.

In some embodiments, the selected identifier may also indicate a selected state of a plurality of selected icons. For example, after the mobile phone detects that the user selects an application icon 1, a mobile phone interface is in an icon editing state, and the icon editing state may be represented as that each application icon is in a jitter state. A small selection box is displayed in an upper right corner of each icon, and is used by the user to select a plurality of application icons that need to be moved. If an icon is selected by tapping, a selected identifier, for example, a check mark, may be displayed in a small selection box in the upper right corner of the icon. If an icon is not selected, a small selection box in the upper right corner of the icon may be blank. If the user further needs to select an application icon 2, the user may also tap a small selection box in an upper right corner of the application icon 2, to change the blank small selection box into the small selection box with a selected identifier.

For example, after it is detected that the user selects the weather application icon, the mobile phone interface is in the icon editing state, and a check mark is displayed on the weather application icon. The mobile phone detects a selection operation performed by the user on the map application icon, for example, a tap or touch and hold, a check mark is also displayed on the map application icon, indicating that the map application icon is also selected at this time. Similarly, another application icon can also be selected.

After the user selects the plurality of application icons, the user may hold down and drag one icon, and another selected application icon may be accordingly moved. In response to a drag operation of the user, all application icons selected by the user are moved along a movement track of a finger of the user.

The foregoing embodiment in which the plurality of application icons are moved simultaneously constitutes no limitation on other embodiments, and there may be a plurality of manners of selecting the plurality of application icons.

In some other embodiments, when it is detected that the application icon selected by the user is a type of application icon, the mobile phone may display a prompt box, and the prompt box is used to ask the user whether to select an application icon of a same type.

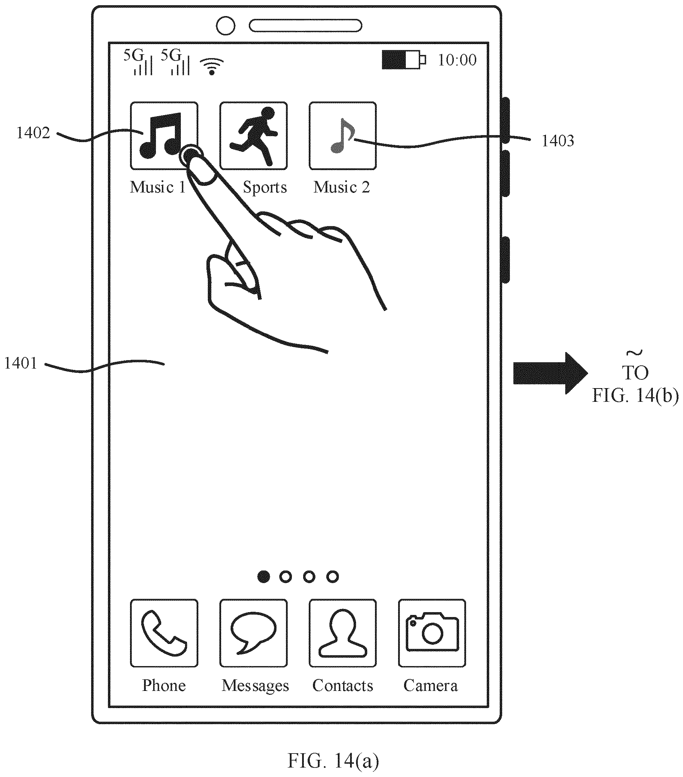

For example, FIG. 14(a) shows an interface 1401, and a plurality of application icons such as a music 1 application icon 1402, a sports application icon, and a music 2 application icon 1403, are arranged on the interface 1401.

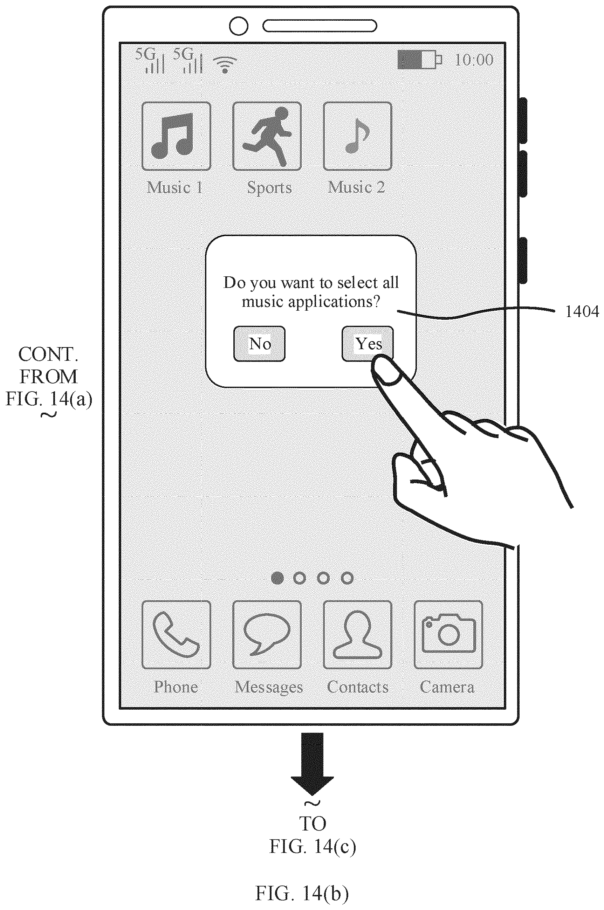

As shown in FIG. 14(b), when it is detected that the user selects the music 1 application icon, the mobile phone may display a prompt box 1404. The prompt box may include a prompt text, a confirmation control, and a cancellation control. The prompt text may be "Do you want to select all music applications". The confirmation control may be configured to trigger the user to confirm selection of all music icons. The cancellation control may be configured to trigger the user to cancel selection of another application icon of a same type.

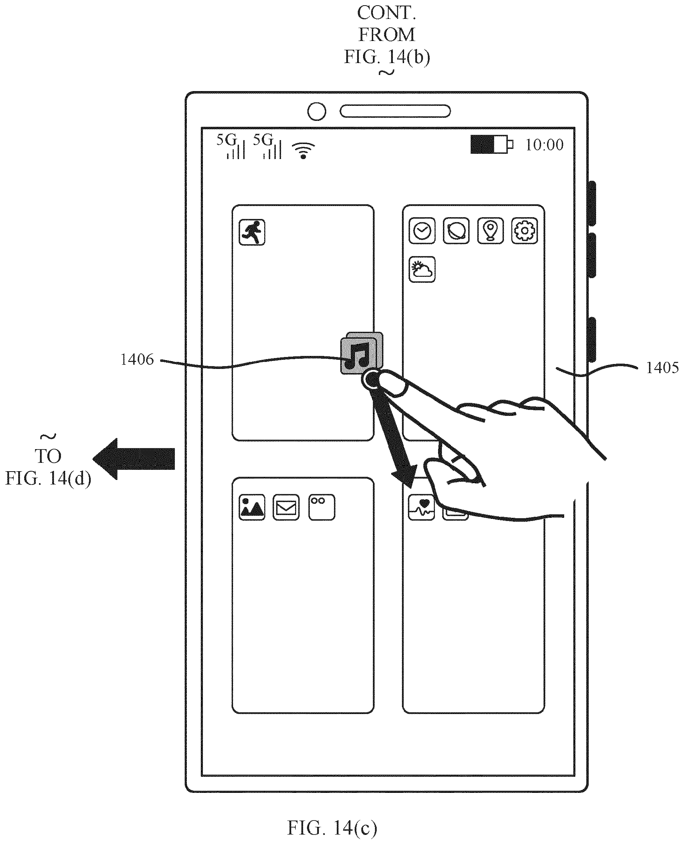

As shown in FIG. 14(c), when detecting a tap operation performed by the user on the confirmation control, the mobile phone may display an interface 1405. The interface 1405 is a page selection interface, and at least one scaled-down page, for example, a page 1, a page 2, a page 3, a page 4, and a selected icon set 1406 generated by all music application icons, is displayed on the interface 1405.

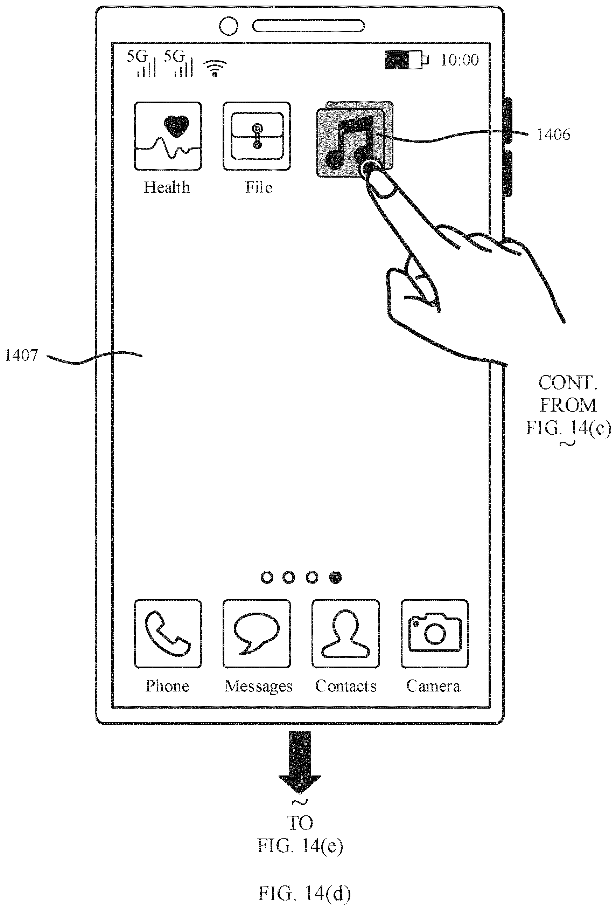

As shown in FIG. 14(d), when detecting that the user drags the selected icon set 1406 from the page 1 to a location of the page 4, the mobile phone may scale up the page 4 for display, namely, the interface 1407. On the interface 1407, the user may select a target location for placing all application icons in the selected icon set 1406.

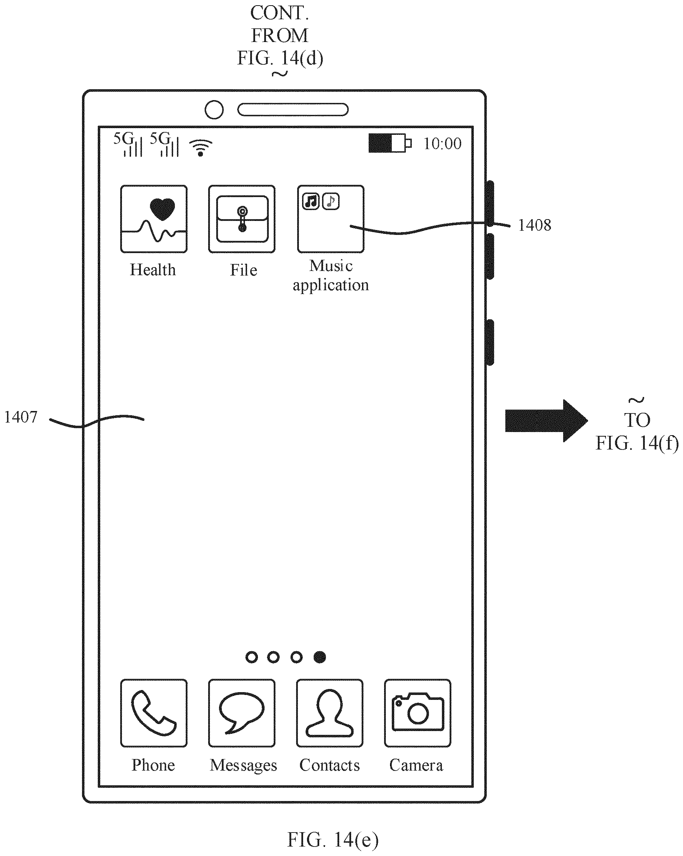

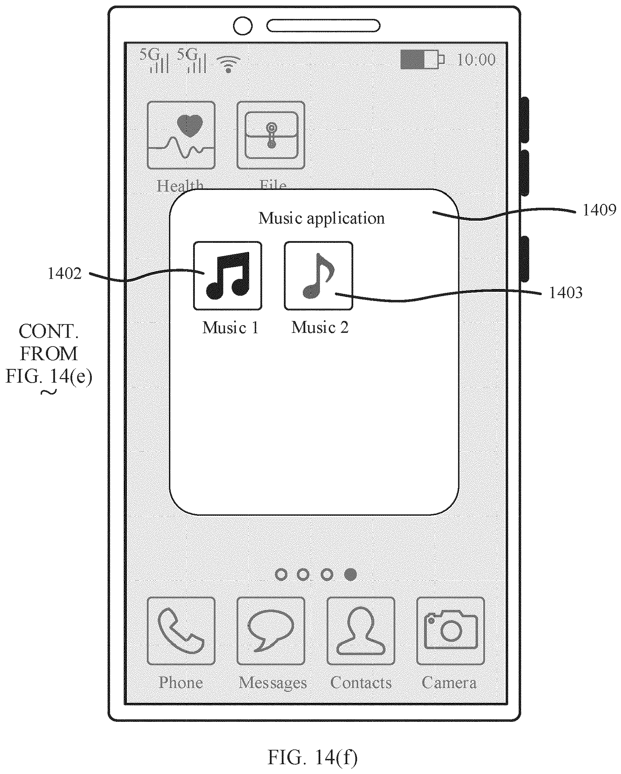

On the interface 1407, the user drags the selected icon set 1406 to a location next to the file application icon. Then, after detecting an operation of releasing the selected icon set 1406 by the user, the mobile phone may generate a folder icon 1408 at a target location selected by the user or a last location on the page, as shown in FIG. 14(e). If the folder icon 1408 is tapped, a folder 1409 may be displayed on the mobile phone interface, as shown in FIG. 14(f). All music application icons in the selected icon set 1406 are displayed in the folder 1409, that is, the music 1 application icon 1402 and the music 2 application icon 1403 are displayed in the folder 1409.

For other more implementations that may be combined, refer to the foregoing embodiments described by using the smartwatch as an example. Details are not described herein again.

The foregoing embodiments in FIG. 10(a) to FIG. 14(f) and a combination thereof are implemented, so that when the user selects or moves the first application icon, a plurality of scaled-down home screen pages or all scaled-down home screen pages are displayed on the mobile phone interface, that is, more application icons are displayed than those previously displayed on the interface. This facilitates the user to find the target location more easily in a process of moving the application icon, thereby reducing time for moving the application icon.

It may be understood that the icon moving method provided in this application is not only applicable to the smartwatch or the mobile phone, but also applicable to another electronic device having a display. For an implementation of various functions, schematic interfaces, or user operations of the electronic device, refer to descriptions in each embodiment in which the smartwatch or the mobile phone is used as an example. Details are not described herein again.

It may be understood that user interfaces described in FIG. 2A to FIG. 14(f) are merely example interfaces, are used to assist a reader in understanding the technical solutions described in this application, and do not constitute limitation on a user interface in other embodiments of this application. In other embodiments, more or fewer user interfaces may be added or deleted according to an actual situation, or more or fewer controls may be added or deleted, or different human-computer interaction operations may be designed, so that the user interface better caters to user experience.

With reference to the embodiments shown in FIG. 2A to FIG. 14(f), the following describes an icon moving method provided in an embodiment of this application.

This method embodiment provides an icon moving method. In a process in which a user moves an icon, the icon moving method may support the electronic device in appropriately adjusting an interface layout to scale down an application icon in a specific ratio, so as to display all application icons on one interface or display more application icons than those displayed on the interface before the icon is moved, so that the user can quickly confirm a target location of the icon in the process of moving the application icon. The icon moving method may further support the electronic device in dynamically scaling up or down a size of an application icon on an interface based on a speed at which the user drags the application icon.

The electronic device 100 in this embodiment of this application may be provided with a display apparatus, which may be, but is not limited to, a mobile phone, a notebook computer, a tablet computer, a smart band, a smartwatch, a PC, and a smart television, and may also be a smart speaker, an electronic photo frame, a desktop computer, a laptop computer, a handheld computer, an AR device, a VR device, an AI device, a vehicle-mounted device, a game console, and another intelligent wearable device, or another type of electronic device like an IoT device. A device type is not limited in this application.

In this embodiment of this application, the electronic device 100 may be provided with a display that has a touch function. One or more applications are installed on the electronic device 100, and a plurality of application functions may be provided. A plurality of graphical interfaces such as a desktop and a plurality of application icons may be displayed on the display of the electronic device 100. The electronic device 100 may further support collection and identification of user operations such as a touch, a gesture, and a voice, and convert the user operations into corresponding instructions. For example, the display of the electronic device 100 may identify a touch operation. When a user operation of selecting and dragging an application icon on a touchscreen is detected, the application icon may be correspondingly moved from a start location to a target location specified by the user.

### Embodiment 1

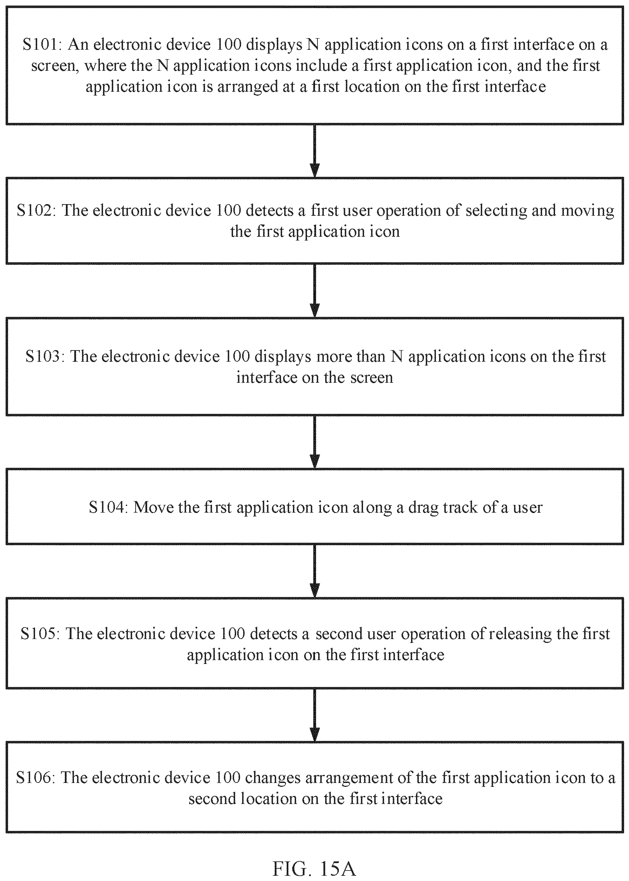

FIG. 15A is a flowchart of an icon moving method according to Embodiment 1. The method specifically includes the following steps.

S101: An electronic device 100 displays N application icons on a first interface on a screen, where the N application icons include a first application icon, and the first application icon is arranged at a first location on the first interface.

In this embodiment of this application, the electronic device 100 may be, for example, a smartwatch. The first interface may be an icon display interface on the watch face interface described in the foregoing embodiments, and application icons corresponding to one or more applications installed on the electronic device 100 may be arranged on the first interface.

The first application icon is an application icon to be moved by a user. The first interface may provide a plurality of icon locations for placing application icons. Arrangement means an arrangement layout on an interface.

The first location for laying out the first application icon is one icon location on the first interface, and is a start location displayed before the first application icon is moved.

S102: The electronic device 100 detects a first user operation of selecting and moving the first application icon.

Selecting and moving the first application icon means that the electronic device 100 detects a tendency of the user to move the first application icon. The first user operation may have a plurality of implementations, and an implementation of the first user operation in this embodiment is not limited.

In some embodiments, the first user operation of selecting and moving the first application icon may be an operation of selecting the first application icon without release. In this case, the electronic device 100 may display an interface of more application icons when the user selects the first application icon without release and the first application icon is not moved. If the user selects the first application icon without movement, and then releases the first application icon, in this process, the electronic device 100 may alternatively display an interface of more application icons, namely, an icon editing interface.

When the first user operation is the operation of selecting the first application icon without release, the electronic device 100 may further detect a drag operation of the user on the first application icon after the first user operation. The electronic device 100 may move the first application icon on the first interface based on the drag operation.

In some other embodiments, the first user operation of selecting and moving the first application icon may alternatively be an operation of selecting and dragging the first application icon. In this case, the electronic device 100 may not display a changed interface when the user selects the first application icon without release, but start to display an interface of more application icons at a moment at which the user moves the first application icon.

When the first user operation is the operation of selecting and dragging the first application icon, the electronic device 100 may move the first application icon on the first interface based on the drag operation in the first user operation.

In some embodiments, after detecting the operation of selecting and moving the first application icon by the user, the electronic device 100 may mark the first application icon as a selected state. For example, the electronic device 100 may change a display size of the first application icon, for example, scale up the first application icon for display or scale down the first application icon for display, to distinguish the first application icon from another application icon, and indicate that the first application icon is in the selected state. Alternatively, the electronic device 100 may mark a special symbol (for example, a check mark or a cross mark) on the first application icon. Alternatively, the electronic device 100 may further highlight the first application icon, to indicate that the first application icon is in the selected state.

In some other embodiments, the user may alternatively choose to move a plurality of application icons at the same time. For one example description, refer to descriptions of the embodiment shown in FIG. 9. Details are not described herein again.

S103: The electronic device 100 displays more than N application icons on the first interface on the screen.

The electronic device 100 may display the more than N application icons on the first interface on the screen in response to the first user operation. When the first user operation is different, a moment at which the electronic device 100 responds may also be different.

For example, when the first user operation is the operation of selecting the first application icon without release, the electronic device 100 may di splay the more than N application icons on the screen in response to the selection operation of the user.

For another example, when the first user operation is the operation of selecting and dragging the first application icon, the electronic device 100 may display the more than N application icons on the screen in response to the drag or movement operation of the user.

In some embodiments, the more than N application icons displayed by the electronic device 100 on the display after detecting the first user operation may include N application icons displayed by the electronic device 100 on the screen before detecting the first user operation. In some other embodiments, an arrangement layout of the first interface may change, and the more than N application icons may be the same as some application icons of the N application icons in step S101.

In some embodiments, the more than N application icons displayed by the electronic device 100 on the screen may be application icons of all applications installed on the electronic device 100, for example, M application icons. This may be referred to as a global state. In this case, all application icons are displayed on one screen. In other words, the first interface reaches a maximum scaling ratio. Refer to the embodiment described in FIG. 4. In some other embodiments, the more than N application icons may be some application icons installed on the electronic device 100. In other words, a scaling ratio of the first interface is less than a scaling ratio in the global state.

To be specific, the first interface of the more than N application icons displayed in this step is the icon editing interface, with an objective of displaying more icons on the screen, to facilitate the user to search for a target location to which an application icon is moved and move the application icon quicker. A specific quantity of application icons displayed on the first interface is not limited in this embodiment.

In some embodiments, sizes of an application icon displayed on the screen before and after the electronic device 100 detects the first user operation may be the same or may be different.

Specifically, a size of the N application icons displayed on the screen before the electronic device 100 detects the first user operation may be referred to as a first size, and a size of the more than N application icons displayed on the screen after the electronic device 100 detects the first user operation may be referred to as a second size.

In some embodiments, the second size may be equal to the first size. In this case, a spacing between application icons is reduced, and more application icons may be displayed on the screen.

In some embodiments, the second size may alternatively be less than the first size. In a case in which a display size of application icons is reduced and a spacing between the application icons remains unchanged, more application icons may be displayed on the screen.

It should be noted that the display size of the selected first application icon may be consistent or inconsistent with a display size of the another application icon on the first interface. This is not limited in this embodiment. For example, after the electronic device detects the first user operation, the display size of the first application icon may be greater than the second size, to distinguish the first application icon from the another application icon, and indicate that the first application icon is in the selected state.

In some other embodiments, before and after the electronic device detects the first user operation, the display size of the first application icon may remain unchanged, or may change dynamically with a size of the another application icon on the first interface. This is not limited in this embodiment.

S104: Move the first application icon along a drag track of the user.

Optionally, the first application icon is moved along the drag track of the user. When the user selects the first application icon, but releases the first application icon without performing the drag operation, step S104 may not be included.

In some embodiments, the size of the application icon displayed by the electronic device 100 on the screen may also dynamically change according to a change of a drag speed at which the user drags the first application icon. For example, a higher drag speed at which the user drags the first application icon indicates a smaller size of the application icon on the first interface. Alternatively, a lower drag speed at which the user drags the first application icon indicates a larger size of the application icon on the first interface.

In some other embodiments, it may also be understood as that a quantity of application icons displayed by the electronic device 100 on the screen dynamically changes according to the change of the drag speed at which the user drags the first application icon. For example, the higher drag speed at which the user drags the first application icon indicates a larger quantity of application icons displayed by the electronic device 100 on the screen. Alternatively, the lower drag speed at which the user drags the first application icon indicates a smaller quantity of application icons displayed by the electronic device 100 on the screen.

In this dynamic change manner, it is considered that when the user drags the application icon at a high speed, the user can quickly drag the application icon to a location near the target location, and when the user drags the application icon at a slow speed, the user can accurately locate the target location.

For an embodiment in which a size of an application icon changes dynamically, refer to the embodiment described in FIG. 7 for details. Details are not described herein again.

In some embodiments, the scaling ratio of the first interface has an upper limit and a lower limit, or a size of an application icon has an upper limit and a lower limit. For example, a scaling ratio of the first interface on which all application icons can be exactly displayed and there is no redundant gap is referred to as a maximum ratio, and a size of the application icons is referred to as a minimum size (first icon size); and a scaling ratio of the first interface on which only one complete application icon can be displayed is referred to as a minimum ratio, and a size of the application icon is referred to as a maximum size (second icon size). A larger scaling ratio of the first interface indicates a smaller size of an application icon on the interface. Other scaling ratios of the first interface are between the minimum ratio and the maximum ratio, or a size of the application icon on the first interface is between the minimum size and the maximum size. Regardless of a speed at which the first application icon is dragged, a changed scaling ratio of the first interface is between the minimum ratio and the maximum ratio, or a changed size of the application icon on the first interface is between the minimum size and the maximum size.

In some embodiments, when the first application icon stops moving or a movement speed of the first application icon is less than a first speed, a quantity of application icons displayed on the screen is less than N.

In some embodiments, when the first application icon stops moving or the movement speed of the first application icon is less than a second speed, an application icon at a location of the first application icon on the first interface is scaled up for display.

In some embodiments, the smartwatch may further determine a display ratio of the application icon on the watch face interface based on a drag speed interval in which the drag speed of the user for the first application icon is located, where the drag speed is detected in real time. That is, the display size of the application icon may be segmented, and one display size corresponds to a plurality of movement speeds within one interval.

Optionally, in a process of moving the first application icon, the electronic device 100 may dynamically adjust the arrangement layout of the interface, that is, dynamically change an arrangement status of the first application icon and the another application icon on the first interface. For details, refer to the embodiment described in FIG. 8. Details are not described herein.

In some other embodiments, in a process of moving the first application icon, if the user wants to give up moving the first application icon, the user may release the first application icon in a state in which no target location is selected, so that the first application icon may return to an initial location, and the first interface exits from an icon editing state. For details, refer to the embodiment described in FIG. 6.

S105: The electronic device 100 detects a second user operation of releasing the first application icon on the first interface.

In some embodiments, the second user operation of releasing the first application icon may be an operation of releasing a finger by the user from a display.

S106: The electronic device 100 changes arrangement of the first application icon to a second location on the first interface.

The electronic device 100 may change the first application icon to the second location on the first interface in response to the second user operation, where the second location is an icon location on the first interface, and is a target location that is indicated by a user operation and to which the first application icon is changed.

In some embodiments, after changing a layout of the first application icon, the electronic device 100 may display, on the screen of the electronic device 100, a part that is of the first interface and that is around the second location, that is, display on the screen that the first application icon is arranged at the second location.

In some other embodiments, after changing a layout of the first application icon, the electronic device 100 may alternatively display, on the screen of the electronic device 100, a part that is of the first interface and that does not include the second location. In this case, the electronic device 100 may detect a third user operation of moving the first interface, for example, an operation of sliding the screen, and may move the second location to a display area on the screen. Then, it is displayed on the screen that the first application icon is arranged at the second location.

In some embodiments, before the layout of the first application icon in the electronic device 100 is changed, a second application icon may be arranged at the second location. Locations of the first application icon and the second application icon may be exchanged. In an embodiment shown in FIG. 5A, the electronic device 100 may change a location of the first application icon to the second location, and the electronic device 100 may change the second application icon to the first location. In some other embodiments, refer to an embodiment shown in FIG. 5B. Application icons at the second location and a location next to the second location may be sequentially moved backward. To be specific, when the electronic device 100 changes a location of the first application icon to the second location, the electronic device 100 may change the second application icon to a location next to the second location.

In some embodiments, when the electronic device 100 has not detected the second user operation of releasing the first application icon on the first interface, but only the user drags the first application icon to the second location, the electronic device 100 may display a preview interface on which the first application icon is changed to the second location on the first interface. The electronic device 100 changes the arrangement of the first application icon to the second location on the first interface only after the user releases the first application icon.

### Embodiment 2

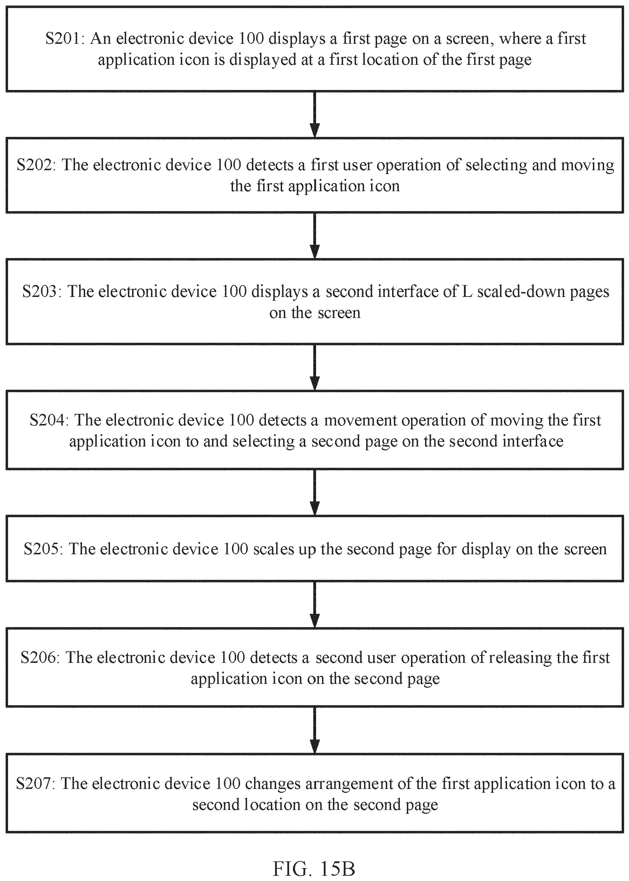

FIG. 15B is a flowchart of an icon moving method according to Embodiment 2. The method specifically includes the following steps.

S201: An electronic device 100 displays a first page on a screen, where a first application icon is displayed at a first location of the first page.

In this embodiment of this application, the electronic device 100 may be, for example, a mobile phone. The first page may be one of the desktop pages described in the foregoing embodiments, and application icons corresponding to one or more applications installed on the electronic device 100 may be arranged on the first page. All application icons in the electronic device 100 may be arranged on a plurality of pages, and each page may provide a plurality of icon locations for displaying an application icon.

The first application icon is an application icon to be moved by a user. The first page may provide a plurality of icon locations for placing application icons. Arrangement means an arrangement layout on an interface.

The first location for laying out the first application icon is one icon location on the first interface, and is a start location displayed before the first application icon is moved.

For example, there are K pages on a desktop of the electronic device 100, a plurality of application icons are arranged on the K pages, and the K pages include the first page and a second page.

For example, refer to a user interface shown in FIG. 10(a) to FIG. 10(d). The first page may be an interface 1001 shown in FIG. 10(a), and the first application icon may be an application icon on the first page, for example, a weather application icon 1002.

S202: The electronic device 100 detects a first user operation of selecting and moving the first application icon.

Selecting and moving the first application icon means that the electronic device 100 detects a tendency of the user to move the first application icon. The first user operation may have a plurality of implementations, and an implementation of the first user operation in this embodiment is not limited.

In some embodiments, the first user operation of selecting and moving the first application icon may be an operation of selecting the first application icon without release. In this case, the electronic device 100 may display a second interface of more pages when the user selects the first application icon without release and the first application icon is not moved. If the user selects the first application icon without movement, and then releases the first application icon, in this process, the electronic device 100 may alternatively display a second interface of more pages, namely, a page selection interface.

When the first user operation is the operation of selecting the first application icon without release, the electronic device 100 may further detect a drag operation of the user on the first application icon on the second interface after the first user operation. The electronic device 100 may move the first application icon on the second interface based on the drag operation.

In some other embodiments, the first user operation of selecting and moving the first application icon may alternatively be an operation of selecting and dragging the first application icon. In this case, the electronic device 100 may not display the second interface when the user selects the first application icon without release, but start to display the second interface of the more pages at a moment at which the user moves the first application icon.

When the first user operation is the operation of selecting and dragging the first application icon, the electronic device 100 may move an application icon on the second interface based on the drag operation in the first user operation.

It should be noted that, in some embodiments, when the user selects an application icon, an interface of a plurality of pages, for example, an interface 1004 shown in FIG. 10(b), may be triggered for display. In some other embodiments, an interface of a plurality of pages, for example, the interface 1004 shown in FIG. 10(b), is triggered for display only when the user selects an application icon, drags the application icon to an edge of the screen, and continues to move the application icon outward. In the operation manner, it is considered that the user moves an icon on a same page without a redundant operation. If it is detected that the user drags the application icon out of a page on which the application icon is located, it indicates that the user has a demand of moving the application icon to another page. Especially when a target page and the another page are not adjacent, the interface 1004 is displayed, so that the user can quickly select the target page, to reduce a user operation. For example, when detecting a third user operation of moving the first application icon to the edge of the screen and out of the first page, the electronic device 100 displays an interface of L scaled-down pages on the screen.

In some embodiments, after detecting the operation of selecting and moving the first application icon by the user, the electronic device 100 may mark the first application icon as a selected state. For example, the electronic device 100 may change a display size of the first application icon, for example, scale up the first application icon for display or scale down the first application icon for display, to distinguish the first application icon from another application icon, and indicate that the first application icon is in the selected state. Alternatively, the electronic device 100 may mark a special symbol (for example, a check mark or a cross mark) on the first application icon. Alternatively, the electronic device 100 may further highlight the first application icon, to indicate that the first application icon is in the selected state.

In some other embodiments, the user may alternatively choose to move a plurality of application icons at the same time. For one example description, refer to descriptions of the embodiment shown in FIG. 13(a) to FIG. 13(e) or FIG. 14(a) to FIG. 14(f). Details are not described herein again.

S203: The electronic device 100 displays the second interface of the L scaled-down pages on the screen.

L is less than or equal to K. To be specific, the L scaled-down pages are displayed on the second interface, and the L pages may be at least one page.

In some embodiments, the L pages include the scaled-down first page and/or the scaled-down second page.

In some embodiments, the L pages may not include the scaled-down first page and/or the scaled-down second page. Through an operation of moving an interface by the user, for example, an operation of dragging an application icon by the user to the edge of the screen, the interface may be moved, and more pages may be displayed. For example, refer to an embodiment shown in FIG. 11B. A page displayed on an interface 1111 in (a) in FIG. 11B does not include a target page 1115. The user may drag the first application icon to a lower edge of the screen, so that the interface moves and more pages may be displayed. For example, the target page 1115 is shown in (b) in FIG. 11B.

When Lis equal to K, all pages of the desktop of the electronic device 100 are displayed on the second interface, that is, all pages of the desktop are displayed on the second interface in a scaled-down manner. Refer to the interface 1004 shown in FIG. 10(b). A total of four pages are included on the home screen of the mobile phone, and the four scaled-down pages are displayed on the interface 1004.

When L is less than K, some pages of the desktop of the electronic device 100 are displayed on the second interface. Refer to an interface 1101 shown in FIG. 11A, the interface 1111 shown in FIG. 11B, and the like. A page layout on the second interface for displaying some pages is not limited in this embodiment.

The second page is a target page to which the first application icon is moved. For example, the second page may be a page 3 1006 shown in FIG. 10(b), a page 2 1104 shown in FIG. 11A, or the like.

The second interface of the L pages displayed in this step is to display more pages, to facilitate the user to search for a target page to which an application icon is moved and move the application icon quicker, especially when there are a large quantity of pages and a start page and the target page are not adjacent. This provides better user experience. A specific quantity of pages displayed on the second interface is not limited in this embodiment.

It should be noted that, when detecting that the first application icon is selected, the electronic device 100 may scale up the first application icon for display, scale down the first application icon for display, keep a size of the first application icon unchanged, or mark the first application icon as the selected state.

That is, the display size of the selected first application icon may be consistent or inconsistent with a display size of the another application icon on the first interface. This is not limited in this embodiment. For example, after the electronic device detects the first user operation, the display size of the first application icon may be greater than the size of the another application icon, to distinguish the first application icon from the another application icon, and indicate that the first application icon is in the selected state.

In some other embodiments, before and after the electronic device detects the first user operation, the display size of the first application icon may remain unchanged, or may change dynamically with a size of the another application icon on the first interface. This is not limited in this embodiment.

In some embodiments, a display size of a plurality of pages on the second interface that are displayed by the electronic device 100 on the screen may also dynamically change according to a change of a drag speed at which the user drags the first application icon. For example, a higher drag speed at which the user drags the first application icon indicates a smaller display size of the pages on the second interface. Alternatively, a lower drag speed at which the user drags the first application icon indicates a larger display size of the pages on the second interface.

In some other embodiments, a quantity of pages on the second interface that are displayed by the electronic device 100 on the screen may also change according to the change of the drag speed at which the user drags the first application icon. For example, the higher drag speed at which the user drags the first application icon indicates a larger quantity of pages on the second interface that are displayed by the electronic device 100 on the screen. Alternatively, the lower drag speed at which the user drags the first application icon indicates a smaller quantity of pages on the second interface that are displayed by the electronic device 100 on the screen. For details, refer to related content in an embodiment shown in FIG. 12(a) to FIG. 12(f). Details are not described herein again.

In some embodiments, a scaling ratio of the second interface has an upper limit and a lower limit, or a size of a scaled-down page has an upper limit and a lower limit. For example, a scaling ratio of the second interface on which all desktop pages can be exactly displayed and there is no redundant gap is referred to as a maximum ratio, and a size of the pages is referred to as a minimum size (first page size); and a scaling ratio of the second interface on which only one complete desktop page can be displayed is referred to as a minimum ratio, and a size of the desktop page is referred to as a maximum size (second page size). A larger scaling ratio of the second interface indicates a smaller size of each page on the interface. Other scaling ratios of the second interface are between the minimum ratio and the maximum ratio, or a size of each page on the first interface is between the minimum size and the maximum size. Regardless of a speed at which the first application icon is dragged, a changed scaling ratio of the second interface is between the minimum ratio and the maximum ratio, or a changed size of each page on the second interface is between the minimum size and the maximum size.

In some embodiments, the mobile phone may further determine a scaling ratio of the second interface based on a drag speed interval in which a drag speed for dragging the first application icon by the user is located, where the drag speed is detected in real time. That is, the scaling ratio of the second interface may be segmented, and one scaling ratio corresponds to a plurality of movement speeds within one interval.

Optionally, in a process of moving the first application icon, the electronic device 100 may dynamically adjust an arrangement layout of each page on the second interface, that is, dynamically change an arrangement status of each page on the second interface. For example, when nine pages are displayed on the second interface, the nine pages may be arranged in a nine-square grid shape; when four pages are displayed on the second interface, the four pages may be arranged in a square block shape; and the like. This is not limited in this embodiment.

In some other embodiments, in a process of moving the first application icon, if the user wants to give up moving the first application icon, the user may release the first application icon in a state in which no target page is selected, for example, release the first application icon in a blank area outside a page area of the second interface, so that the first application icon may return to an initial location, and the first interface exits from an icon editing state.

S204: The electronic device 100 detects a movement operation of moving the first application icon to and selecting the second page on the second interface.

The operation of selecting the second page may be that the user drags the first application icon to an area of the scaled-down second page for a period of time, for example, 1 second.

S205: The electronic device 100 scales up the second page on the screen for display.

Optionally, in response to a movement operation of selecting the scaled-down second page on the second interface, the electronic device 100 may scale up the second page for display on the screen of the electronic device 100.

For example, for the operation that the electronic device 100 scales up the second page for display on the screen, refer to an interface 1007 shown in FIG. 10(d).

In some other embodiments, when detecting that the user moves the first application icon to and selects the second page on the second interface, the electronic device 100 directly displays a case that the first application icon is changed to the second page. In this case, the user does not need to drag the first application icon on the scaled-up second page. Alternatively, after the user moves the first application icon to and selects the second page on the second interface, the user releases the first application icon. Then, a case that the first application icon is changed to the second page is directly displayed. In this case, the user does not need to drag the first application icon on the scaled-up second page.

S206: The electronic device 100 detects a second user operation of releasing the first application icon on the second page.

In some embodiments, the second user operation of releasing the first application icon may be an operation of releasing a finger by the user from a display.

S207: The electronic device 100 changes arrangement of the first application icon to a second location on the second page.

The second location is a location, on the second page, at which the first application icon is released by the user, and the second location is also an icon location on the second page.

In some embodiments, before the layout of the first application icon in the electronic device 100 is changed, a second application icon may be arranged at the second location. Locations of the first application icon and the second application icon may be exchanged. In other words, the electronic device 100 may change a location of the first application icon to the second location, and the electronic device 100 may change the second application icon to the first location. In some other embodiments, refer to an embodiment shown in FIG. 10(a) to FIG. 10(d). Application icons at the second location and a location next to the second location may be sequentially moved backward. To be specific, when the electronic device 100 changes a location of the first application icon to the second location, the electronic device 100 may change the second application icon to a location next to the second location.

In some embodiments, after changing the first application icon to the second location on the second page, the electronic device 100 may display, on the screen, the first application icon arranged at the second location on the second page.

In some other embodiments, after the electronic device 100 changes the arrangement of the first application icon to the second location on the second page, a page displayed on the screen may not be the second page. In this case, the user may switch to display the second page by swiping the screen leftward or rightward, and then see that the first application icon displayed on the second page is arranged at the second location.

It may be understood that the icon moving method provided in this application is not only applicable to the smartwatch or the mobile phone, but also applicable to another electronic device having a display. In this application, a plurality of embodiments described by using the mobile phone or the smartwatch as an example do not constitute limitation on other embodiments. When a device type of the electronic device 100 is another device, for an implementation of various functions, schematic interfaces, or user operations of the electronic device, refer to descriptions in each embodiment in which the smartwatch or the mobile phone is used as an example. Details are not described herein again. Solutions that can implement an inventive concept of this application shall fall within the protection scope of this application.

In a process in which the user moves the application icon, more application icons or more pages including application icons can be displayed by implementing the method provided in this application, to facilitate the user to quickly locate the target location. The method provides a more convenient, quicker, and more user-friendly interface operation manner, reduces time for dragging the application icon to the target location, improves human-computer interaction performance, facilitates the user operation, and improves user experience.

With reference to the foregoing embodiments, the following describes a functional module of an electronic device provided in an embodiment of this application.

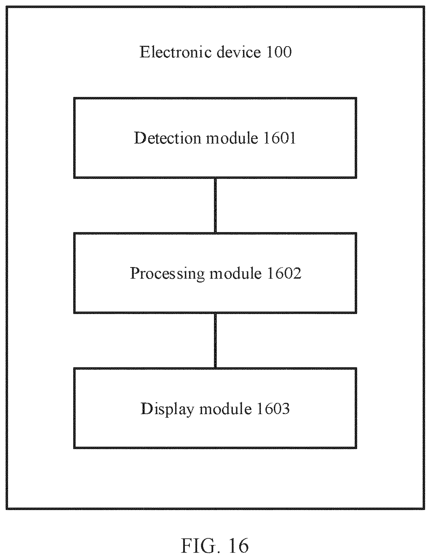

FIG. 16 shows functional modules of an electronic device 100. The electronic device 100 may include a detection module 1601, a processing module 1602, a display module 1603, and the like.

The detection module 1601 may be configured to: detect a user operation performed by a user on the electronic device 100, and send a corresponding instruction to the processing module 1602. For example, when detecting a touch and hold operation performed by the user on a display of the electronic device 100, the detection module 1601 may send a first instruction to the processing module 1602, where the first instruction instructs the electronic device 100 to enter a home screen editing state. In the home screen editing state, when detecting a sliding operation performed by the user on the display of the electronic device 100, the detection module 1601 may send a second instruction to the processing module 1602, where the second instruction instructs a movement track of an application icon selected by the user.

The processing module 1602 may be configured to: receive the instruction sent by the detection module 1601, and process an interface image according to the instruction.

For example, the processing module 1602 receives and responds to the first instruction sent by the detection module 1601, and scales down application icons of all applications installed on the electronic device 100 in a specific ratio, to obtain an interface image in a home screen editing state. In some embodiments, the processing module 1602 may alternatively receive and respond to the first instruction sent by the detection module 1601, and scale down application icons of some applications in the electronic device 100 in a specific ratio, to obtain an interface image in a home screen editing state.

For example, the processing module 1602 may receive and respond to the second instruction sent by the detection module 1601, to obtain an interface image in an icon moving state. In the interface image, a movement track of an application icon selected by the user is the same as a sliding operation track of the user.

After obtaining the interface image, the processing module 1602 may send the interface image to the display module 1603.

The display module 1603 may be configured to receive and display the interface image sent by the processing module 1602.

For more functions descriptions of the detection module 1601, the processing module 1602, and the display module 1603, refer to descriptions of the foregoing embodiments in FIG. 2A to FIG. 15B. Details are not described herein again.

The implementations described in the foregoing embodiments are merely examples for description, and do not constitute any limitation on other embodiments of this application. Specific internal implementations may vary according to different types of electronic devices, different operating systems carried, different programs used, and different interfaces invoked. This is not limited in embodiments of this application, provided that features and functions described in embodiments of this application can be implemented. The implementations of this application may be randomly combined, to achieve different technical effect.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)".

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the process or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in a computer-readable storage medium. When the program is run, the processes of the methods in embodiments are performed. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, a person of ordinary skill in the art should understand that the person of ordinary skill in the art may still make modifications to the technical solutions described in the foregoing embodiments or make equivalent replacements to some technical features thereof, without departing from the scope of the technical solutions of embodiments of this application.

## Claims

1. An icon moving method, wherein the method comprises:
displaying, by an electronic device, N application icons on a first interface on a screen, wherein the N application icons comprise a first application icon, and the first application icon is arranged at a first location on the first interface;
detecting, by the electronic device, a first user operation of selecting and moving the first application icon;
displaying, by the electronic device, more than N application icons on the first interface on the screen in response to the first user operation;
detecting, by the electronic device, a second user operation of releasing, by a user, the first application icon on the first interface; and
changing, by the electronic device, arrangement of the first application icon to a second location on the first interface, wherein the second location is a location, on the first interface, at which the first application icon is released by the user.

2. The method according to claim 1, wherein the first user operation of selecting and moving the first application icon comprises an operation of selecting the first application icon without release, or an operation of selecting and moving the first application icon.

3. The method according to claim 2, wherein the first user operation comprises the operation of selecting the first application icon without release; and the method further comprises:
further detecting, by the electronic device, a drag operation, and moving, by the electronic device, the first application icon on the first interface based on the drag operation.

4. The method according to claim 2, wherein the first user operation comprises the operation of selecting and dragging the first application icon; and the method further comprises:
moving, by the electronic device, the first application icon on the first interface based on the operation of dragging the first application icon.

5. The method according to any one of claims 2 to 4, wherein the displaying, by the electronic device, more than N application icons on the first interface on the screen specifically comprises:
when detecting that the first application icon is selected without release, displaying, by the electronic device, the more than N application icons on the first interface on the screen; and/or
when the first application icon is selected and dragged, displaying, by the electronic device, the more than N application icons on the first interface on the screen.

6. The method according to any one of claims 1 to 5, wherein a quantity of application icons displayed on the screen is less than or equal to M, and M is a quantity of all application icons in the electronic device.

7. The method according to any one of claims 1 to 6, wherein a size of an application icon displayed on the screen is greater than or equal to a first icon size, and is less than or equal to a second icon size.

8. The method according to any one of claims 2 to 7, wherein in a process of moving the first application icon, a higher speed indicates a smaller size of the application icon on the first interface or a larger quantity of application icons displayed by the electronic device on the screen.

9. The method according to any one of claims 2 to 8, wherein in the process of moving the first application icon, a lower speed indicates a larger size of the application icon on the first interface or a smaller quantity of application icons displayed by the electronic device on the screen.

10. The method according to any one of claims 1 to 9, comprising: in the process of moving the first application icon, changing, by the electronic device, arrangement of the first application icon on the first interface.

11. The method according to any one of claims 1 to 10, wherein an application icon displayed after the electronic device detects the first user operation is scaled down in size compared with the application icon displayed before the electronic device detects the first user operation.

12. The method according to any one of claims 1 to 11, wherein a size of the N application icons is a first size, a size of the more than N application icons is a second size, and the second size is less than or equal to the first size.

13. The method according to any one of claims 1 to 12, wherein the more than N application icons comprise the N application icons.

14. The method according to any one of claims 1 to 13, wherein the more than N application icons are all application icons in the electronic device.

15. The method according to any one of claims 1 to 14, comprising: when detecting that the first application icon is selected, scaling up, by the electronic device, the first application icon for display, scaling down the first application icon for display, keeping a size of the first application icon unchanged, or marking the first application icon as a selected state.

16. The method according to any one of claims 1 to 15, wherein when the first application icon stops moving or a movement speed of the first application icon is less than a first speed, a quantity of application icons displayed on the screen is less than N.

17. The method according to any one of claims 1 to 16, comprising: when the first application icon stops moving or the movement speed of the first application icon is less than a second speed, scaling up an application icon for display at a location of the first application icon on the first interface.

18. The method according to any one of claims 1 to 17, wherein after the changing, by the electronic device, arrangement of the first application icon to a second location on the first interface, the method further comprises:
displaying, by the electronic device on the screen, the first application icon arranged at the second location on the first interface.

19. The method according to any one of claims 1 to 18, wherein after the changing, by the electronic device, arrangement of the first application icon to a second location on the first interface, the method further comprises:
detecting, by the electronic device, a third user operation of moving the first interface; and
displaying, by the electronic device on the screen, the first application icon arranged at the second location on the first interface.

20. The method according to any one of claims 1 to 19, wherein before the electronic device changes the arrangement of the first application icon to the second location on the first interface, a second application icon is located at the second location.

21. The method according to claim 20, comprising: when the electronic device changes the arrangement of the first application icon to the second location on the first interface, changing arrangement of the second application icon to the first location.

22. The method according to claim 20, comprising: when the electronic device changes the arrangement of the first application icon to the second location on the first interface, moving the second application icon to a location next to the second location.

23. The method according to any one of claims 1 to 22, wherein the first interface comprises a plurality of pages, application icons on the first interface are arranged on the plurality of pages, and the N application icons are arranged on a first page.

24. The method according to claim 23, wherein the displaying, by the electronic device, more than N application icons on the first interface on the screen specifically comprises:
displaying, by the electronic device, the plurality of scaled-down pages on the screen, wherein a quantity of application icons comprised on the plurality of scaled-down pages is greater than N.

25. An icon moving method, wherein the method comprises:
displaying, by an electronic device, a first page, wherein a first application icon is displayed at a first location on the first page, application icons of the electronic device are arranged on K pages, and the K pages comprise the first page and a second page;
detecting, by the electronic device, a first user operation of selecting and moving the first application icon;
displaying, by the electronic device, an interface of L scaled-down pages, wherein L is less than or equal to K;
detecting, by the electronic device, a movement operation of moving the first application icon to the scaled-down second page;
scaling up, by the electronic device, the second page for display;
detecting, by the electronic device, a second user operation of releasing the first application icon on the second page; and
changing, by the electronic device, arrangement of the first application icon to a second location on the second page, wherein the second location is a location, on the second page, at which the first application icon is released by a user.

26. The method according to claim 25, wherein the L pages comprise the scaled-down first page and the scaled-down second page.

27. The method according to claim 25 or 26, wherein a higher speed of moving the first application icon indicates more pages displayed on the interface.

28. The method according to any one of claims 25 to 27, wherein a lower speed of moving the first application icon indicates fewer pages displayed on the interface.

29. The method according to any one of claims 25 to 28, comprising: when detecting that the first application icon is selected, scaling up, by the electronic device, the first application icon for display, scaling down the first application icon for display, keeping a size of the first application icon unchanged, or marking the first application icon as a selected state.

30. The method according to any one of claims 25 to 29, wherein the displaying, by the electronic device, an interface of L scaled-down pages specifically comprises:
when detecting a third user operation of moving the first application icon to an edge of a screen and out of the first page, displaying, by the electronic device, the interface of the L scaled-down pages on the screen.

31. The method according to any one of claims 25 to 30, wherein after the changing, by the electronic device, arrangement of the first application icon to a second location on the second page, the method further comprises:
displaying, by the electronic device on the screen, the first application icon arranged at the second location on the second page.

32. The method according to any one of claims 25 to 31, comprising: before the electronic device changes the arrangement of the first application icon to a second location on the second page, arranging a second application icon at the second location; and
when the electronic device changes the arrangement of the first application icon to the second location on the second page, moving the second application icon to a location next to the second location.

33. An electronic device, wherein the electronic device comprises a sensor, a display, a memory, a processor coupled to the memory, and one or more programs, the sensor is configured to detect a user operation, the display is configured to display an interface, the memory stores computer-executable instructions, and when the processor executes the instructions, the electronic device is enabled to implement the method according to any one of claims 1 to 24 or claims 25 to 32.

34. A computer-readable storage medium, comprising instructions, wherein when the instructions are run on an electronic device, the electronic device is enabled to perform the method according to any one of claims 1 to 24 or claims 25 to 32.
